# EUROPEAN PATENT SPECIFICATION

(11) **EP 4 165 904 B1**
(45) Date of publication and mention of the grant of the patent: **24.09.2025**
(21) Application number: 21734462.1
(22) Date of filing: 01.06.2021
(51) Int. Cl.: H04W 40/34, H04W 76/16, H04W 88/06

(54) **ACCESS TRAFFIC MANAGEMENT**
ZUGANGSVERKEHRSVERWALTUNG
GESTION DE TRAFIC D'ACCÈS

(30) Priority: 12.06.2020 GB 202009000
(43) Date of publication of application: 19.04.2023
(73) Proprietor: Darwin Innovation Group Ltd, Oxford, Oxfordshire OX2 6EQ (GB); Telefonica UK Ltd, Slough, Berkshire SL1 4DX (GB)
(72) Inventor: ALMEIDA BARRETO, Rodrigo de, Oxford Oxfordshire OX4 1SY (GB)
(74) Representative: Herrero & Asociados, S.L.
(86) International application number: PCT/GB2021/051344
(87) International publication number: WO 2021/250374

(56) References cited:
- EP-A1- 3 618 503
- WO-A1-2019/010702
- WO-A1-2019/192528
- DEUTSCHE TELEKOM: "Additional options for L4 convergence method in Solution 1", vol. SA WG2, no. Vilnius, Lithuania; 20180702 - 20180706, 13 July 2018 (2018-07-13), XP051538534, Retrieved from the Internet <URL:http://www.3gpp.org/ftp/tsg%5Fsa/WG2%5FArch/TSGS2%5F128%5FVilnius/Docs/S2%2D187091%2Ezip> [retrieved on 20180713]

## Description

### Technical Field

The disclosure relates to methods for managing access traffic in an access network and nodes configured to operate in accordance with those methods.

### Background

There exist various techniques for managing access traffic in an access network. 3GPP TR 23.793 V16 identifies techniques that define how a core network and a user equipment (UE) can support multiple access traffic steering, switching and splitting (ATSSS) between a 3GPP access network and non-3GPP access network. These existing techniques are further specified in 3GPP TS 23.501 V16, 3GPP TS 23.502 V16, 3GPP TS 23.503 V16, and 3GPP TS 24.193 V16. Although the non-3GPP access network is not set to any particular type, most existing techniques are specifically linked to a wireless local area network (LAN) with a few linked to a residential gateway. There is currently no existing technique supporting ATSSS with the use of a satellite access network as the non-3GPP access network.

ETSI TR 103 272 identifies key characteristics and features for a hybrid fixed satellite system (FSS) satellite/terrestrial network architecture for high speed broadband access. The key component of the architecture is a pair of gateways which control separate links which are established over satellite and over terrestrial networks, including mobile networks. The gateway which provides connectivity to users is called an integrated user gateway (IUG) and the gateway which provides connectivity to the data network is called an integrated network gateway (ING). In this architecture, the underlying networks (e.g. satellite and mobile) are not involved in any aspects of the control plane between the pair of gateways and connectivity over each type of access is provided on an over the top fashion.

ETSI TR 103 351 proposes an approach for traffic routing over heterogeneous links based on traffic classification and link selection with selection rules depending on type of traffic, e.g. user datagram protocol (UDP) traffic or transmission control protocol (TCP) traffic. UDP traffic is forwarded via links prioritised based on round-trip time (RTT). For TCP, link estimation is used so that long objects are routed over the highest bandwidth link available and short objects are routed over the lowest RTT. The use of a multipath transmission control protocol (TCP) is discussed for multipath coordination between IUG and ING by leveraging the user plane. Numerous theoretical and experimental studies have been proposed to adapt MPTCP and address the challenges linked to the heterogeneity of satellite and terrestrial mobile links and the presence of middleboxes (in particular, the presence of performance enhancing proxies) in the satellite path.

However, MPTCP has been shown to not work well and require modifications or extensions in a scenario combining mobile and satellite access networks, particularly when performance enhancing proxies are used. There is thus a need for an alternative to the use of MPTCP and the other existing techniques, which works with any kind of 3GPP and non-3GPP network.

3GPP document S2-187091, titled "Additional options for L4 convergence method in Solution 1" discloses a ATSSS operation and architecture wherein a SM-AT3SF sets up ATSSS rules to steer traffic between a 3GPP and a non-3GPP network and transmits them to a UE and a UPF based on network conditions measured by the UPF and the UE.

EP 3 618 503 A1 discloses that a service access management node (ATSSS/AT3SF) may be set as an independent network element entity between a (R)AN and the network element of a 5G core network. The ATSSS/AT3SF steers traffic between a 3GPP and a non-3GPP network.

### Summary

It is thus an object of the disclosure, which is set in the appended claims, to obviate or eliminate at least some of the above-described disadvantages associated with existing techniques.

The invention is set in appended set of independent claims. Advantageous aspects are set in the appended dependent claims.

Therefore, advantageous techniques for managing access traffic in an access network are provided.

### Brief description of the drawings

For a better understanding of the techniques, and to show how they may be put into effect, reference will now be made, by way of example, to the accompanying drawings, in which:
Figure 1 is a schematic illustrating a system according to an embodiment;
Figure 2 is a block diagram illustrating an application function (AF) node according to an embodiment;
Figure 3 is a flowchart illustrating a method performed by an AF node according to an embodiment;
Figure 4 is a block diagram illustrating a user equipment (UE) according to an embodiment;
Figure 5 is a flowchart illustrating a method performed by a UE according to an embodiment;
Figure 6 is a schematic illustrating a system from a UE perspective according to an embodiment;
Figure 7 is a schematic illustrating traffic in a system according to an embodiment;
Figure 8 is a schematic illustrating traffic in a system according to an embodiment;
Figure 9 is a block diagram illustrating a user plane function (UPF) node according to an embodiment;
Figure 10 is a flowchart illustrating a method performed by a UPF node according to an embodiment;
Figure 11 is a schematic illustrating a system from a UPF node perspective according to an embodiment;
Figure 12 is a block diagram illustrating an AF node according to an embodiment;
Figure 13 is a block diagram illustrating a UE according to an embodiment; and
Figure 14 is a block diagram illustrating a UPF node according to an embodiment.

### Detailed Description

As mentioned earlier, advantageous techniques for managing access traffic in an access network are described herein. As is well known in the art, an access network is a type of telecommunications network which connects subscribers to respective service providers. Herein, access traffic can be any traffic in the access network or, more specifically, any traffic that is intended to be transmitted via the access network. The access network referred to herein comprises a third Generation Partnership Project (3GPP) access network and a non-3GPP access network. The techniques described herein are implemented by an application function (AF) node, a user equipment (UE), and/or a user plane function (UPF) node.

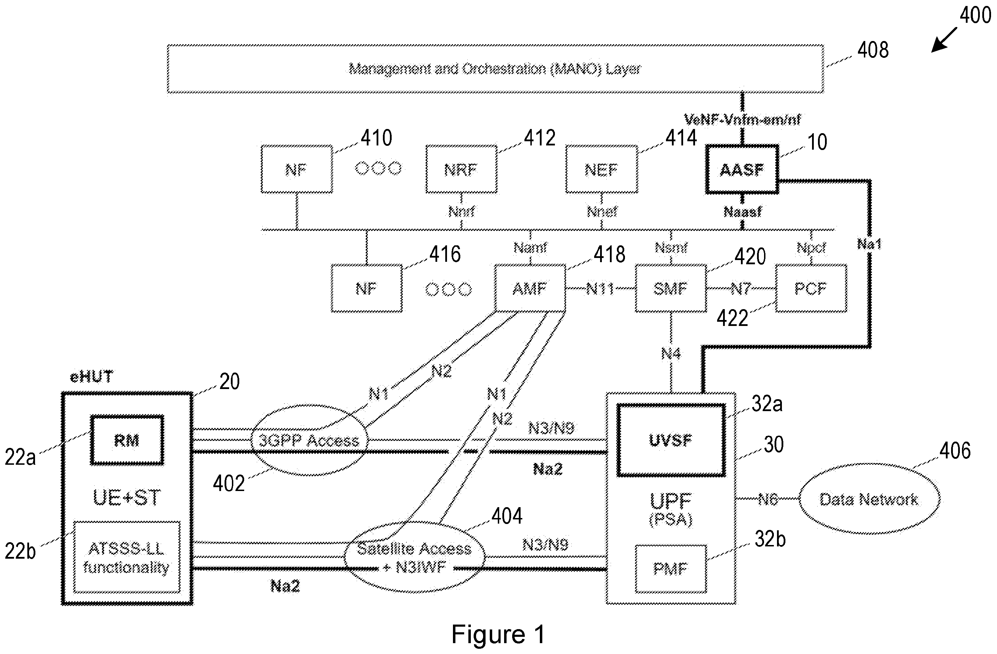

**Figure 1** is a block diagram illustrating a system 400 in accordance with an embodiment. More specifically, Figure 1 illustrates a system architecture. The system architecture can be a service based architecture (SBA). The system 400 illustrated in Figure 1 comprises the AF node 10, the UE 20, and the UPF node 30. In some embodiments, the UE 20 can be a user terminal, such as an evolved hybrid user terminal (eHUT) or any other user terminal.

As illustrated in Figure 1, the AF node 10 operates between a control plane of a core network and a user plane of the core network. The AF node 10 can communicate with the control plane of the core network via an interface (or reference point) Naasf. In some embodiments, the interface Naasf can enable event exposure services, e.g. for use by analytics. The types of events exposed may, for example, be related to network performance, network function load, service experience, UE mobility, UE communication, QoS sustainability, abnormal behaviour, user data congestion, and/or any other events.

The AF node 10 can communicate with the user plane of the core network via an interface (or reference point) Na1. The interface Na1 is between the AF node 10 and the UPF node 30. In some embodiments, the AF node 10 may comprise a software-defined domain orchestrator capability, e.g. a software-defined wide area network (SD-WAN) domain orchestrator capability. Here, the term domain refers to the access network domain (i.e. 3GPP and/or non-3GPP).

The AF node 10 described herein can assist the control plane of the core network with access traffic steering, switching, and splitting (ATSSS), e.g. connectivity and/or networking feasibility in relation to ATSSS. Thus, the AF node 10 may also be referred to herein as an assisted ATSSS support function (AASF) node. Access traffic steering is a procedure that selects an access network for a new data flow and transfers the access traffic of this data flow over the selected access network. Access traffic switching is a procedure that moves all access traffic of an ongoing data flow from one access network to another access network in a way that maintains the continuity of the data flow. Access traffic splitting is a procedure that splits the access traffic of a data flow across multiple access networks. When traffic splitting is applied to a data flow, some access traffic of the data flow may be transferred via one access network and some other traffic of the same data flow is transferred via another access network. The AF node 10 described herein can integrate with other network function (NF) nodes within the system, e.g. to interact regarding establishment, control, and/or lifecycle management.

The core network referred to herein can be a fifth generation (5G) network, or any other suitable generation of network. Similarly, the access network referred to herein can be a 5G network, or any other suitable generation of network. In some embodiments, the access network referred to herein may be a radio access network (RAN), or any other type of network. In some embodiments, core network may support a protocol data unit (PDU) connectivity service. A PDU connectivity service can provide the exchange of PDUs between the UE 20 and the data network 406. A PDU connectivity service can be supported through PDU sessions. PDU session may be established upon request from the UE 20, e.g. by the UE 20 establishing a user plane and a control plane to the data network 406.

As illustrated in Figure 1, the core network comprises one or more network function (NF) nodes 410, 412, 414, 416, 418, 420, 422. The one or more NF nodes may comprise a network repository function (NRF) node 412, a network exposure function (NEF) node 414, an access and mobility management function (AMF) node 418, a session management function (SMF) node 420, a policy control function (PCF) node 422, and/or one or more other NF nodes 410, 416. The one or more NF nodes 410, 412, 414, 416, 418, 420, 422 can communicate with the control plane of the core network via standard interfaces (e.g. Nnrf, Nnef, Namf, Nsmf, Npcf, etc.). The AMF node 418 and the SMF node 420 can communicate via a standard interface N11. The SMF node 420 and the PCF node 422 can communicate via a standard interface N7. In some embodiments, the AF node 10 can communicate with a management and orchestration (MANO) layer 408, e.g. via an interface (or reference point) VeNF-Vnfm-em/nf. Thus, there may be an interface VeNF-Vnfm-em/nf between the AF node 10 and the MANO layer 408. The interface VeNF-Vnfm-em/nf may be referred to as a northbound interface. In view of the technique described herein, more detailed reporting and analytics information can be made available to the MANO layer 408.

The UPF node 30 is in the user plane of the core network. Thus, the AF node 10 and the UPF node 30 can communicate via the interface Na1. The UPF node 30 and the SMF node 420 can communicate via a standard interface N4. The UPF node 30 can communicate with the data network 406, e.g. via a standard interface N6. The UPF node 30 can be a UPF node with a session anchor (SA) role, e.g. a PDU session anchor role (PSA). In some embodiments, there may be one or more other UPF nodes in the path between the UE and the UPF node 30.

As will be described in more detail later, the UPF node 30 comprises processing circuitry. In some embodiments, the UPF node 30 can comprise a software-defined gateway and/or a software-defined controller 32a executable by the processing circuitry of the UPF node 30 to cause the processing circuitry of the UPF node 30 to operate in the manner described herein. The software-defined gateway and/or the software-defined controller 32a can be implemented as virtual network functions according to some embodiments. The software-defined gateway and/or the software-defined controller 32a may, for example, be a software-defined wide area network (SD-WAN) gateway and/or an SD-WAN controller. The software-defined gateway and/or the software-defined controller 32a may be referred to as a user plane virtual SD-WAN functionality (UVSF). The SD-WAN functionality can simplify the management and operation of a WAN by decoupling the networking hardware from its control mechanism. That is, the SD-WAN functionality can implement control plane and user plane separation. It can also add management and orchestration layers, which facilitate service orchestration based on lifecycles of end-to-end connectivity services across one or more network service domains. For example, the SD-WAN functionality can leverage orchestration to maintain an overlay topology, which allows effective use of traffic engineering capabilities to make the best use of a hybrid WAN with heterogeneous links of 3GPP and non-3GPP access networks. In some embodiments, the UPF node 30 may also support a performance management functionality (PMF) 32b.

The UPF node 30 and the UE 20 can communicate via the access network. More specifically, the UPF node 30 and the UE 20 can communicate via one or more connectivity paths (e.g. links or tunnels, such as the N3 tunnel and/or N9 tunnel) of the access network. The one or more connectivity paths can comprise one or more physical connectivity paths and/or one or more logical connectivity paths. The connectivity paths can be a standard interface N3, N9, or another interface (or reference point) Na2. The interface Na2 is between the UPF node 30 and the UE 20. In some embodiments, the interface Na2 can be for control of the routing module (RM) functionality.

As illustrated in Figure 1, the access network comprises a 3GPP access network 402 and a non-3GPP access network 404. The 3GPP access network 402 can be any network that applies an access technology that is specified by the 3GPP. For example, the 3GPP access network 402 may comprise a mobile access network, such as a (e.g. 5G) radio access network (RAN), and/or any other suitable 3GPP access network. The non-3GPP access network 404 can be any network that applies an access technology that is not specified by the 3GPP. For example, the non-3GPP access network 404 may comprise a wireless local area network (WLAN), a fixed network (e.g. a fixed broadband network), a satellite network (e.g. a satellite broadband network), and/or any other non-3GPP access network.

As will be described in more detail later, the UE 20 comprises processing circuitry. In some embodiments, the UE 20 can comprise a software-defined gateway and/or a software-defined controller 22a executable by the processing circuitry of the UE 20 to cause the processing circuitry of the UE 20 to operate in the manner described herein. The software-defined gateway and/or the software-defined controller 22a can be implemented as virtual network functions according to some embodiments. The software-defined gateway and/or the software-defined controller 22a may, for example, be a software-defined wide area network (SD-WAN) gateway and/or an SD-WAN controller. The software-defined gateway and/or the software-defined controller 22a may be referred to as a routing module (RM). The SD-WAN functionality can simplify the management and operation of a WAN by decoupling the networking hardware from its control mechanism. That is, the SD-WAN functionality can implement control plane and user plane separation. It can also add management and orchestration layers, which facilitate service orchestration based on lifecycles of end-to-end connectivity services across one or more network service domains. For example, the SD-WAN functionality can leverage orchestration to maintain an overlay topology, which allows effective use of traffic engineering capabilities to make the best use of a hybrid WAN with heterogeneous links of 3GPP and non-3GPP access networks.

In some embodiments, the UE 20 may support an ATSSS functionality 22b, such as an ATSSS lower layer (ATSSS-LL) functionality. In some embodiments, the UE 20 may support satellite functionality. Thus, in some embodiments, the UE 20 can combine the capabilities of a UE with the capabilities of a satellite terminal (ST) and/or a RM.

The AMF node 418 can communicate with the 3GPP access network and/or the non-3GPP access network via one or more standard interfaces N1, N2.

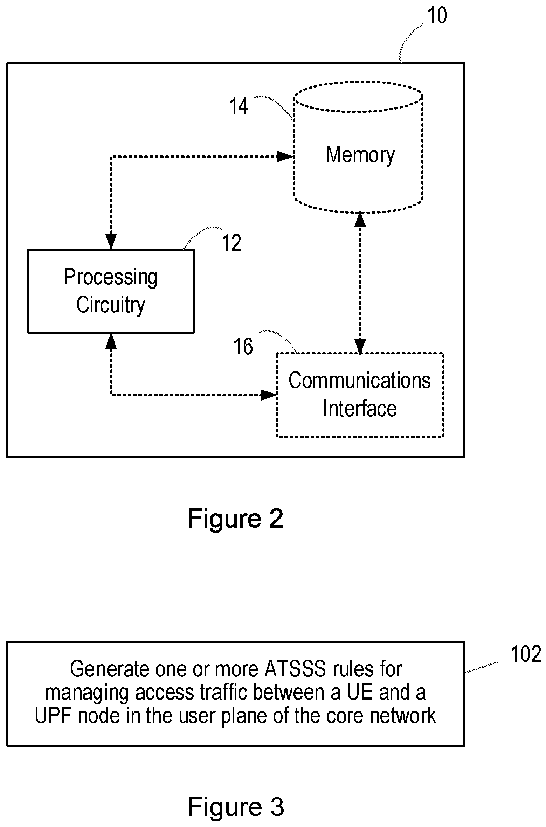

**Figure 2** illustrates the AF node 10 in accordance with an embodiment. The AF node 10 operates between the control plane of the core network and the user plane of the core network. The AF node 10 is for managing access traffic in the access network. For example, the AF node 10 can be for influencing traffic routing and policy management of traffic in the access and core networks. As mentioned earlier, the access network comprises a 3GPP access network 402 and a non-3GPP access network 404. The AF node 10 may, for example, be a physical machine (e.g. a server) or a virtual machine (VM).

As illustrated in Figure 2, the AF node 10 comprises processing circuitry (or logic) 12. The processing circuitry 12 controls the operation of the AF node 10 and can implement the method described herein in respect of the AF node 10. The processing circuitry 12 can be configured or programmed to control the AF node 10 in the manner described herein. The processing circuitry 12 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the AF node 10. In some embodiments, the processing circuitry 12 can be configured to run software to perform the method described herein in respect of the AF node 10. The software may be containerised according to some embodiments. Thus, in some embodiments, the processing circuitry 12 may be configured to run a container to perform the method described herein in respect of the AF node 10.

Briefly, the processing circuitry 12 of the AF node 10 is configured to generate one or more ATSSS rules for managing access traffic between the UE 20 and the UPF node 30 in the user plane of the core network. The one or more ATSSS rules are generated based on one or more network conditions in the 3GPP access network 402 and the non-3GPP access network 404. The one or more ATSSS rules are indicative of whether access traffic is to be transmitted via the 3GPP access network 402 and/or the non-3GPP access network 404.

As illustrated in Figure 2, in some embodiments, the AF node 10 may optionally comprise a memory 14. The memory 14 of the AF node 10 can comprise a volatile memory or a non-volatile memory. In some embodiments, the memory 14 of the AF node 10 may comprise a non-transitory media. Examples of the memory 14 of the AF node 10 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 12 of the AF node 10 can be connected to the memory 14 of the AF node 10. In some embodiments, the memory 14 of the AF node 10 may be for storing program code or instructions which, when executed by the processing circuitry 12 of the AF node 10, cause the AF node 10 to operate in the manner described herein in respect of the AF node 10. For example, in some embodiments, the memory 14 of the AF node 10 may be configured to store program code or instructions that can be executed by the processing circuitry 12 of the AF node 10 to cause the AF node 10 to operate in accordance with the method described herein in respect of the AF node 10. Alternatively or in addition, the memory 14 of the AF node 10 can be configured to store any traffic, information, data, messages, requests, responses, indications, notifications, signals, or similar, that are described herein. The processing circuitry 12 of the AF node 10 may be configured to control the memory 14 of the AF node 10 to store traffic, information, data, messages, requests, responses, indications, notifications, signals, or similar, that are described herein.

In some embodiments, as illustrated in Figure 2, the AF node 10 may optionally comprise a communications interface 16. The communications interface 16 of the AF node 10 can be connected to the processing circuitry 12 of the AF node 10 and/or the memory 14 of AF node 10. The communications interface 16 of the AF node 10 may be operable to allow the processing circuitry 12 of the AF node 10 to communicate with the memory 14 of the AF node 10 and/or vice versa. Similarly, the communications interface 16 of the AF node 10 may be operable to allow the processing circuitry 12 of the AF node 10 to communicate with the UE 20, the UPF node 30, and/or any other node described herein. The communications interface 16 of the AF node 10 can be configured to transmit and/or receive traffic, information, data, messages, requests, responses, indications, notifications, signals, or similar, that are described herein. In some embodiments, the processing circuitry 12 of the AF node 10 may be configured to control the communications interface 16 of the AF node 10 to transmit and/or receive traffic, information, data, messages, requests, responses, indications, notifications, signals, or similar, that are described herein.

Although the AF node 10 is illustrated in Figure 2 as comprising a single memory 14, it will be appreciated that the AF node 10 may comprise at least one memory (i.e. a single memory or a plurality of memories) 14 that operate in the manner described herein. Similarly, although the AF node 10 is illustrated in Figure 2 as comprising a single communications interface 16, it will be appreciated that the AF node 10 may comprise at least one communications interface (i.e. a single communications interface or a plurality of communications interface) 16 that operate in the manner described herein. It will also be appreciated that Figure 2 only shows the components required to illustrate an embodiment of the AF node 10 and, in practical implementations, the AF node 10 may comprise additional or alternative components to those shown.

**Figure 3** is a flowchart illustrating a method performed by the AF node 10 in accordance with an embodiment. The method is for managing access traffic in the access network. For example, the method is for influencing traffic routing and policy management based on the assessed network performance of the access network. As mentioned earlier, the access network comprises the 3GPP access network 402 and the non-3GPP access network 404. The AF node 10 described earlier with reference to Figure 2 is configured to operate in accordance with the method of Figure 3. The method can be performed by or under the control of the processing circuitry 12 of the AF node 10. As mentioned earlier, the AF node 10 operates between the control plane of the core network and the user plane of the core network.

As illustrated at block 102 of Figure 3, one or more ATSSS rules are generated for managing access traffic between the UE 20 and the UPF node 30 in the user plane of the core network. More specifically, the processing circuitry 12 of the AF node 10 generates one or more ATSSS rules. As mentioned earlier, the one or more ATSSS rules are indicative of whether access traffic is to be transmitted via the 3GPP access network 402 and/or the non-3GPP access network 404. Herein, the traffic transmitted from the UE 20 to the UPF node 30 can be referred to as uplink traffic and the traffic transmitted from the UPF node 30 to the UE 20 can be referred to as downlink traffic.

Generally, the PCF node 422 is the primary source of ATSSS policy decisions, which are distributed to SMF node 420 and the UE 20 as policy and control charging (PCC) rules. The PCF node 422 may also provide UE route selection policy (URSP) rules to the UE 20 for instructing the UE 20 to establish a session, such as a PDU session or a multi access PDU (MA PDU) session. If dynamic PCC rules are not deployed, local rules at the SMF node 420 and at the UE 20 may be used. Other policies may provide details on how ingress IP packets associated with each application flow (or the members of an application flow group) are to be handled. These policies may provide rules concerning forwarding, security, rate limits, and others. The AF node 10 may thus generate the one or more ATSSS rules based on information collected from elsewhere, such as from at least one NF node 410, 412, 414, 416, 418, 420 in the control plane of the core network, the UE 20, etc.

Thus, in some embodiments, the one or more ATSSS rules may be generated to be in compliance with one or more rules (or policies) of at least one NF node 410, 412, 414, 416, 418, 420 in the control plane of the core network, such as the PCF node 422 and/or the SMF node 420 in the control plane of the core network. The objective of the AF node 10 can be, not to overrule, but to support and complement ATSSS decisions from the one or more NF nodes of the core network, e.g. regarding connectivity and policy treatment. An information model maintained at the AF node 10 can be slave to data managed by one or more NF nodes of the core network.

Alternatively or in addition, the one or more ATSSS rules may be generated to be in compliance with a predefined resource configuration of the user plane of the core network. In some embodiments, even when the AF node 10 complements the ATSSS functionality in the core network, influencing certain configurations, data maintained at the AF node 10 can reflect actual user plane resource configuration. As such, the resources that are to be handled at user plane level, may therefore be different to the usual SD-WAN deployment scenarios, which commonly involve internet protocol security (IPSec) tunnels or multiprotocol label switching virtual private networks (MPLS VPNs) for underlay connectivity service and point-to-point internet protocol (IP) connections (encrypted or not) as tunnel virtual connections.

In some embodiments, the fine granularity of application flow classification may be combined with knowledge of an end-to-end bearer condition for the AF node 10 to assess policy rules from the control plane of the core network and, where necessary, use service based interface (SBI) services, to influence access traffic routing decisions (e.g. through Nnef_TrafficInfluence service) and to manage policy flow descriptions (e.g. through Nnef_PFDManagement service).

As mentioned earlier, the one or more ATSSS rules are generated based on one or more network conditions in the 3GPP access network 402 and the non-3GPP access network 404. In some embodiments, the one or more network conditions may comprise one or more network conditions in one or more logical connectivity paths (e.g. links or tunnels, such as the N3 tunnel and/or N9 tunnel) of the 3GPP access network 402, one or more network conditions in one or more physical connectivity paths of the 3GPP access network 402, one or more network conditions in one or more logical connectivity paths of the non-3GPP access network 404, and/or one or more network conditions in one or more physical connectivity paths of the non-3GPP access network 404. In some embodiments, the one or more network conditions may be indicative of network performance, network usage, and/or network faults. In some embodiments, the one or more network conditions indicative of network performance may comprise service experience, quality of service (QoS) characteristics, and/or QoS sustainability. In some embodiments, the one or more network conditions indicative of network usage may comprise network function load, UE mobility, UE communication, and/or bearer liveliness. In some embodiments, the one or more network conditions indicative of network faults may comprise abnormal behaviour and/or user data congestion.

Although not illustrated in Figure 3, in some embodiments, the method may comprise identifying the one or more network conditions. More specifically, the processing circuitry 12 of the AF node 10 may identify the one or more network conditions according to some embodiments. In some embodiments, the one or more network conditions may be identified from information on the 3GPP access network and the non-3GPP access network. In some of these embodiments, the method may comprise acquiring this information on the 3GPP access network and the non-3GPP access network. More specifically, the processing circuitry 12 of the AF node 10 may be configured to acquire this information according to some embodiments.

In some embodiments, the information may be acquired from the MANO layer 408, one or more NF nodes 410, 412, 414, 416, 418, 420 in the control plane of the core network, the UPF node 30, and/or the UE 20. In some embodiments, the information acquired from the UE 20 and/or the UPF node 30 may comprise network status information on one or more bearers associated with one or more connectivity paths of the 3GPP access network and/or non-3GPP access network. In some embodiments, the network status information may comprise information about availability and quality of service (QoS) of the one or more bearers. In some embodiments, the information acquired from the MANO layer 408 may comprise one or more rules related to ATSSS. In some embodiments, the information acquired from the one or more NF nodes 410, 412, 414, 416, 418, 420 may comprise one or more policies, a session (e.g. PDU session) status, and/or one or more connectivity path (e.g. link or tunnel) identifiers.

In some embodiments, the AF node 10 may complement information acquired from one or more NF node 410, 412, 414, 416, 418, 420 in the control plane of the core network to build a topology with information collected from the (e.g. UVSF functionality of) the UPF node 30 and/or the UE 20. The information obtained from the UPF node 30 and/or the UE 20 may complement the information obtained from the one or more NF node 410, 412, 414, 416, 418, 420 in the control plane of the core network, e.g. with details about end-to-end bearer status, availability, and/or QoS.

In some embodiments, acquiring the information may comprise initiating transmission of a request for the information towards the MANO layer 408, the one or more NF nodes 410, 412, 414, 416, 418, 420, the UPF node 30, and/or the UE 20. More specifically, the processing circuitry 12 of the AF node 10 may be configured to initiate transmission of the request for the information according to some embodiments. Herein, the term "initiate" can mean, for example, cause or establish. Thus, the processing circuitry 12 of the AF node 10 can be configured to itself transmit (e.g. via a communications interface 16 of the AF node 10) the request for the information or can be configured to cause another node to transmit the request for the information.

In some embodiments, initiating transmission of the request for the information towards the one or more NF nodes 410, 412, 414, 416, 418, 420 may comprise initiating transmission of the request directly towards the control plane of the core network. In other embodiments, initiating transmission of the request for the information towards the one or more NF nodes 410, 412, 414, 416, 418, 420 may comprise initiating transmission of the request indirectly towards the control plane of the core network, e.g. via one or more service communication proxy (SCP) nodes and/or via one or more NEF nodes. In some embodiments, initiating transmission of the request for the information towards the UE 20 may comprise initiating transmission of the request directly towards the UE 20. In other embodiments, initiating transmission of the request for the information towards the UE 20 may comprise initiating transmission of the request indirectly towards the UE 20 via the UPF node 30, such as via the Na1 and Na2 interfaces illustrated in Figure 1.

In some embodiments, acquiring the information may comprise receiving the information from the UE 20, UPF node 30, the MANO layer 408, and/or the one or more NF nodes 410, 412, 414, 416, 418, 420. More specifically, the processing circuitry 12 of the AF node 10 may be configured to receive the information (e.g. via a communications interface 16 of the AF node 10). In some embodiments, receiving the information from the one or more NF nodes 410, 412, 414, 416, 418, 420 may comprise receiving the information directly from the one or more NF nodes 410, 412, 414, 416, 418, 420. In other embodiments, receiving the information from the one or more NF nodes 410, 412, 414, 416, 418, 420 may comprise receiving the information indirectly from the one or more NF nodes 410, 412, 414, 416, 418, 420, e.g. via one or more SCP nodes and/or via one or more NEF nodes. In some embodiments, receiving the information from the UE 20 may comprise receiving the information directly from the UE 20. In other embodiments, receiving the information from the UE 20 may comprise receiving the information indirectly from the UE 20 via the UPF node 30, such as via the Na2 and Na1 interfaces illustrated in Figure 1.

In some embodiments, the method may comprise registering with an NRF node 412 in the control plane of the core network and consuming services from the one or more NF nodes of the core network, such as the PCF node 422, the SMF node 420, and/or the AMF node 418, to acquire the information from the one or more NF nodes. More specifically, the processing circuitry 12 of the AF node 10 may be configured to register with the NRF node 412 and consume services of the one or more NF nodes of the core network according to some embodiments. For this purpose, the AF node 10 (or, more specifically, the processing circuitry 12 of the AF node 10) may use NF node discovery or rely on one or more SCP nodes to mediate communication with the one or more NF nodes. In some embodiments, the method may comprise registering with an NRF node 412 in the control plane of the core network and consuming services of an NEF node 414 in the control plane of the core network to acquire the information from the one or more NF nodes of the core network, such as the PCF node 422, the SMF node 420, and/or the AMF node 418. More specifically, the processing circuitry 12 of the AF node 10 may be configured to register with the NRF node 412 and consume services of the NEF node 414 according to some embodiments.

In some embodiments, the AF node 10 (or, more specifically, the processing circuitry 12 of the AF node 10) may request the use of a specific UPF node 30 with the functionality described herein, e.g. a UPF node 30 comprising the UVSF functionality. This may be the case where the AF node 10 is responsible for orchestrating network resource management of (e.g. the UVSF in) the UPF node 30 and (e.g. directly, or indirectly via the UPF node 30) signalling with (e.g. the RM) of the UE 20. In some embodiments, orchestration performed by the AF node 10 (or, more specifically, the processing circuitry 12 of the AF node 10) may comprise mapping and/or maintaining a view of underlay and overlay networking.

Although not illustrated in Figure 3, in some embodiments, the method may comprise initiating transmission of the one or more ATSSS rules towards the UE and/or the UPF node. More specifically, the processing circuitry 12 of the AF node 10 may be configured to initiate transmission of (e.g. itself transmit, such as via a communications interface 16 of the AF node 10, or cause another node to transmit) the one or more ATSSS rules towards the UE and/or the UPF node. In some embodiments, the transmission of the one or more ATSSS rules may be initiated directly towards the UE 20 or indirectly towards the UE 20 via the UPF node 30, such as via the Na2 and Na1 interfaces illustrated in Figure 1.

The one or more ATSSS rules can inform the UE 20 and/or the UPF node 30 whether (and, for example, how) to utilise the 3GPP access network 402 and/or the non-3GPP access network 404. For example, the one or more ATSSS rules can inform the UE 20 and/or the UPF node 30 which of 3GPP access network 402 and/or the non-3GPP access network 404 to use for which (e.g. type of) access traffic.

For example, the one or more ATSSS rules may comprise a rule that categorises one of the access networks (3GPP or non-3GPP) as active and the other as standby. In this example, the standby access network may only be used for the access traffic if the active access network is unavailable. In another example, the one or more ATSSS rules may comprise a rule that steers the access traffic to the access network which has the smallest delay, e.g. with respect to round trip time (RTT). In yet another example, the one or more ATSSS rules may comprise a rule that splits the access traffic across both access networks, e.g. based on a percentage split, which can be useful for load balancing. In yet another example, the one or more ATSSS rules may comprise a rule that steers the access traffic to a highest priority access network, e.g. until that access network is considered to be congested. At that point, traffic may be split towards the lowest priority access network.

In some embodiments, the one or more ATSSS rules may comprise a precedence rule, a traffic descriptor, and/or an access selection descriptor. The precedence rule can determine an order in which the one or more ATSSS rules are evaluated. The traffic descriptor can comprise one or more internet protocol (IP) filter parameters and/or one or more application identities that specify matching criteria for the access traffic. The access selection descriptor can be indicative of a steering mode and/or steering functionality to be applied for the matching access traffic.

Although not illustrated in Figure 3, in some embodiments, the method may comprise, for at least one bearer of the access network, storing (e.g. in a memory 14 of the AF node 10 and/or any other memory) a unique identifier that uniquely identifies the bearer. The unique identifier that uniquely identifies the bearer may be stored with a unique identifier that uniquely identifies a connectivity path of the 3GPP access network and/or non-3GPP access network to which the bearer is associated. Although also not illustrated in Figure 3, in some embodiments, the method may comprise, for at least one QoS flow of the access network, storing (e.g. in a memory 14 of the AF node 10 and/or any other memory) a unique identifier that uniquely identifies the QoS flow. The unique identifier that uniquely identifies the QoS flow can be stored with a unique identifier that uniquely identifies a session (e.g. a PDU session) in the 3GPP access network and/or non-3GPP access network to which the QoS flow is associated.

In some embodiments, the method may comprise and thus the AF node 10 (or, more specifically, the processing circuitry 12 of the AF node 10) may perform any one or more of the following tasks relevant to ATSSS:
- configuring, activating and/or managing connectivity and logical networking;
- maintaining relevant topology and/or routing/encapsulation information of user plane resources, e.g. associated with multi access protocol data unit (MA PDUs);
- capturing and/or exposing network events, e.g. related to performance and/or fault management;
- maintaining connectivity policy consonant with NF rules, e.g. PCF and/or session management function SMF rules;
- collecting and/or exposing usage information, e.g. via the northbound interface; and
- collecting, generating and/or exposing analytics information, e.g. via the northbound interface and/or Naasf interface.

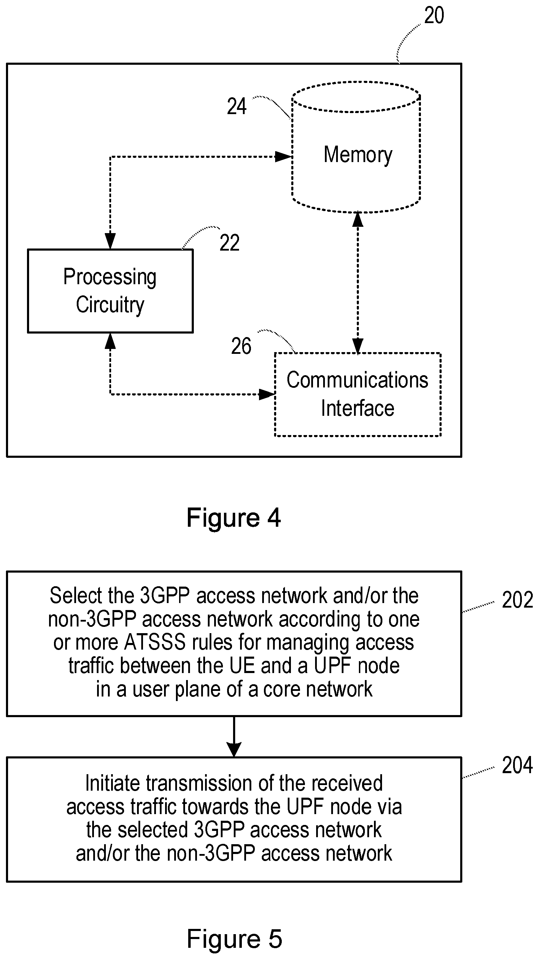

**Figure 4** illustrates the UE 20 in accordance with an embodiment. The UE 20 is for managing access traffic in the access network. As mentioned earlier, the access network comprises a 3GPP access network 402 and a non-3GPP access network 404.

As also mentioned earlier, in some embodiments, the UE 20 can be a user terminal, such as an evolved hybrid user terminal (eHUT) or any other user terminal. The UE 20 can provide an interface between the local network of a user and the access network, i.e. the 3GPP access network and the non-3GPP access network. As such, the UE 20 may implement Layer 1 and Layer 2 capabilities. The UE 20 may also implement Layer 3 and upper layer capabilities.

As illustrated in Figure 4, the UE 20 comprises processing circuitry (or logic) 22. The processing circuitry 22 controls the operation of the UE 20 and can implement the method described herein in respect of the UE 20. The processing circuitry 22 can be configured or programmed to control the UE 20 in the manner described herein. The processing circuitry 22 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the UE 20. In some embodiments, the processing circuitry 22 can be configured to run software to perform the method described herein in respect of the UE 20. The software may be containerised according to some embodiments. Thus, in some embodiments, the processing circuitry 22 may be configured to run a container to perform the method described herein in respect of the UE 20.

Briefly, the processing circuitry 22 of the UE 20 is configured to, in response to receiving access traffic from a user network, select the 3GPP access network and/or the non-3GPP access network according to one or more ATSSS rules for managing access traffic between the UE 20 and the UPF node 30 in the user plane of the core network. The one or more ATSSS rules are generated by the AF node 10 operating between the control plane of the core network and the user plane of the core network. The processing circuitry 22 of the UE 20 is configured to initiate transmission of the received access traffic towards the UPF node 30 via the selected 3GPP access network and/or the non-3GPP access network.

As illustrated in Figure 4, in some embodiments, the UE 20 may optionally comprise a memory 24. The memory 24 of the UE 20 can comprise a volatile memory or a non-volatile memory. In some embodiments, the memory 24 of the UE 20 may comprise a non-transitory media. Examples of the memory 24 of the UE 20 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 22 of the UE 20 can be connected to the memory 24 of the UE 20. In some embodiments, the memory 24 of the UE 20 may be for storing program code or instructions which, when executed by the processing circuitry 22 of the UE 20, cause the UE 20 to operate in the manner described herein in respect of the UE 20. For example, in some embodiments, the memory 24 of the UE 20 may be configured to store program code or instructions that can be executed by the processing circuitry 22 of the UE 20 to cause the UE 20 to operate in accordance with the method described herein in respect of the UE 20. Alternatively or in addition, the memory 24 of the UE 20 can be configured to store any traffic, information, data, messages, requests, responses, indications, notifications, signals, or similar, that are described herein. The processing circuitry 22 of the UE 20 may be configured to control the memory 24 of the UE 20 to store traffic, information, data, messages, requests, responses, indications, notifications, signals, or similar, that are described herein.

In some embodiments, as illustrated in Figure 4, the UE 20 may optionally comprise a communications interface 26. The communications interface 26 of the UE 20 can be connected to the processing circuitry 22 of the UE 20 and/or the memory 24 of UE 20. The communications interface 26 of the UE 20 may be operable to allow the processing circuitry 22 of the UE 20 to communicate with the memory 24 of the UE 20 and/or vice versa. Similarly, the communications interface 26 of the UE 20 may be operable to allow the processing circuitry 22 of the UE 20 to communicate with the AF node 10, the UPF node 30, and/or any other node described herein. The communications interface 26 of the UE 20 can be configured to transmit and/or receive traffic, information, data, messages, requests, responses, indications, notifications, signals, or similar, that are described herein. In some embodiments, the processing circuitry 22 of the UE 20 may be configured to control the communications interface 26 of the UE 20 to transmit and/or receive traffic, information, data, messages, requests, responses, indications, notifications, signals, or similar, that are described herein.

Although the UE 20 is illustrated in Figure 4 as comprising a single memory 24, it will be appreciated that the UE 20 may comprise at least one memory (i.e. a single memory or a plurality of memories) 24 that operate in the manner described herein.

Similarly, although the UE 20 is illustrated in Figure 4 as comprising a single communications interface 26, it will be appreciated that the UE 20 may comprise at least one communications interface (i.e. a single communications interface or a plurality of communications interface) 26 that operate in the manner described herein. It will also be appreciated that Figure 4 only shows the components required to illustrate an embodiment of the UE 20 and, in practical implementations, the UE 20 may comprise additional or alternative components to those shown.

**Figure 5** is a flowchart illustrating a method performed by the UE 20 in accordance with an embodiment. The method is for managing access traffic in the access network. As mentioned earlier, the access network comprises the third 3GPP access network 402 and the non-3GPP access network 404. The UE 20 described earlier with reference to Figure 4 is configured to operate in accordance with the method of Figure 5. The method can be performed by or under the control of the processing circuitry 22 of the UE 20.

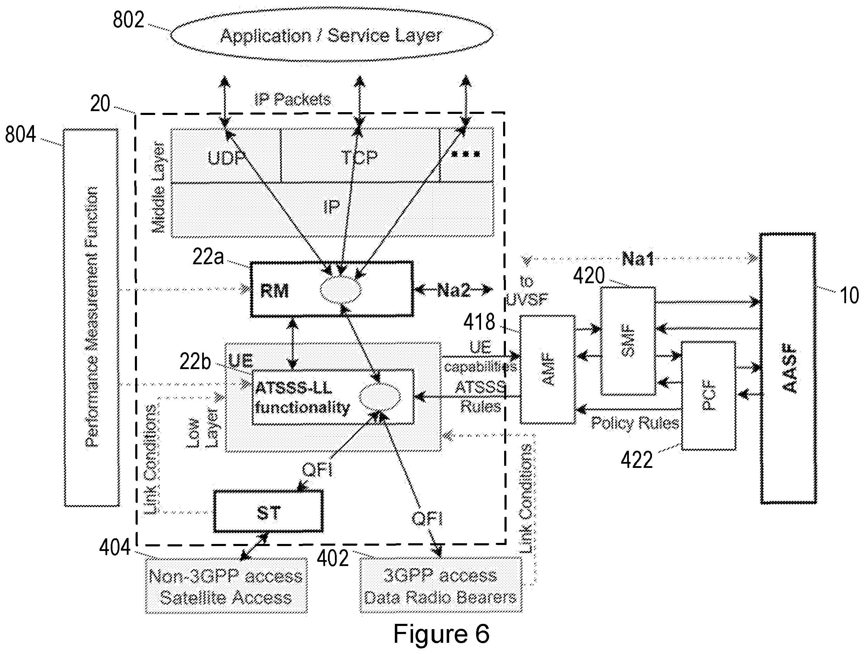

**Figure 6** is a block diagram illustrating a system in accordance with an embodiment, such as the system illustrated in Figure 1. The system of Figure 6 is illustrated from the perspective of the UE 20. The method of Figure 5 will now be described with reference to Figures 1 and 6.

As illustrated at block 202 of Figure 5, in response to receiving access traffic from a user network (or a user environment), the 3GPP access network 402 and/or the non-3GPP access network 404 is selected according to one or more ATSSS rules for managing access traffic between the UE 20 and the UPF node 30 in the user plane of the core network. More specifically, the processing circuitry 22 (e.g. the RM 22a) of the UE 20 selects the 3GPP access network 402 and/or the non-3GPP access network 404. The access traffic received from the user network (or user environment) can be access traffic that is directed to the data network 406. As illustrated in Figure 6, the access traffic may be received from an application or service layer 802. The access traffic can comprise one or more packets, such as one or more internet protocol (IP) packets. As illustrated in Figure 6, the access traffic may be received via a middle layer, e.g. according to a protocol, such as user datagram protocol (UDP) or transmission control protocol (TCP), which may depend on the type of traffic. This protocol can be built on top of an IP protocol.

The one or more ATSSS rules are generated by the AF node 10 operating between the control plane of the core network and the user plane of the core network, as described earlier. In some embodiments, the one or more ATSSS rules may be in compliance with one or more rules (or policies) of at least one NF node 410, 412, 414, 416, 418, 420 in the control plane of the core network, such as the PCF node 422 and/or the SMF node 420 in the control plane of the core network. Alternatively or in addition, the one or more ATSSS rules may be generated to be in compliance with a predefined resource configuration of the user plane of the core network. The one or more ATSSS rules can be as described earlier and may comprise any one or more of the examples described earlier.

Although not illustrated in Figure 5, in some embodiments, the method may comprise acquiring the one or more ATSSS rules. More specifically, the processing circuitry 22 (or the ATSSS functionality, e.g. ATSSS-LL functionality, 22b) of the UE 20 can be configured to acquire the one or more ATSSS rules. In some embodiments, acquiring the one or more ATSSS rules may comprise receiving the one or more ATSSS rules from the AF node 10. More specifically, the processing circuitry 22 (or the ATSSS functionality, e.g. ATSSS-LL functionality, 22b) of the UE 20 can be configured to receive (e.g. via a communications interface 26 of the UE 20) the one or more ATSSS rules from the AF node 10. In some embodiments, the one or more ATSSS rules may be received directly from the AF node 10 or indirectly from the AF node 10 via the UPF node 30, such as via the Na1 and Na2 interfaces illustrated in Figure 1. In some embodiments, the one or more ATSSS rules may be received from the PCF node 422 and/or the SMF node 420, e.g. via the AMF node 418. In this case, the AF node 10 may have influenced such rules from the PCF node 422 and/or the SMF node 420.

As illustrated at block 204 of Figure 5, transmission of the received access traffic is initiated towards the UPF node 30 via the selected 3GPP access network 402 and/or the non-3GPP access network 404. More specifically, the processing circuitry 22 (or the RM 22a) of the UE 20 initiates transmission of the received access traffic. The processing circuitry 22 (or the RM 22a) of the UE 20 can be configured to itself transmit the received access traffic (e.g. via a communications interface 26 of the UE 20) or cause another node to transmit the received access traffic.

For example, in some embodiments, as illustrated in Figure 6, the RM 22a of the UE 20 can be configured to transmit the received access traffic to the 3GPP access network 402 and/or the non-3GPP access network 404 via the ATSSS, e.g. ATSSS-LL, functionality 22b. In some embodiments, the processing circuitry 22 (or the RM 22a) of the UE 20 can be configured to transmit the received access traffic to the 3GPP access network 402 and/or the non-3GPP access network 404 via one or more intermediary nodes. For example, as illustrated in Figure 6, the processing circuitry 22 (or the RM 22a) of the UE 20 can be configured to transmit the received access traffic to non-3GPP satellite access network 404 via a satellite terminal (ST). Although a non-3GPP satellite access network has been used as an example in Figure 6, it will be understood that any other non-3GPP access network is also possible.

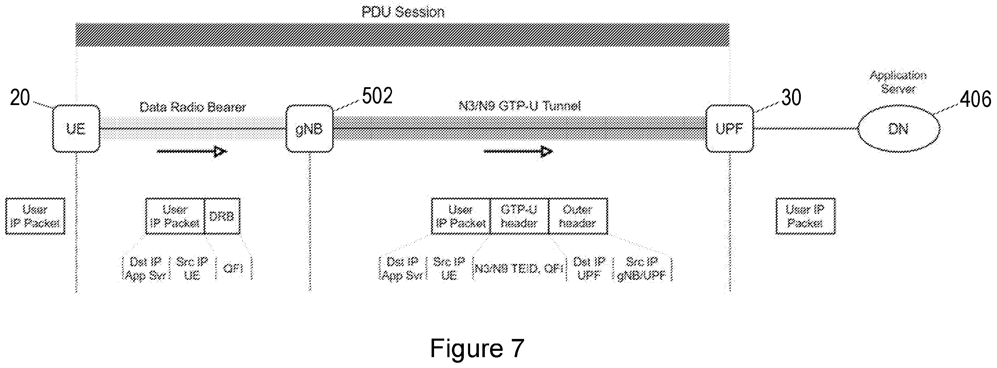

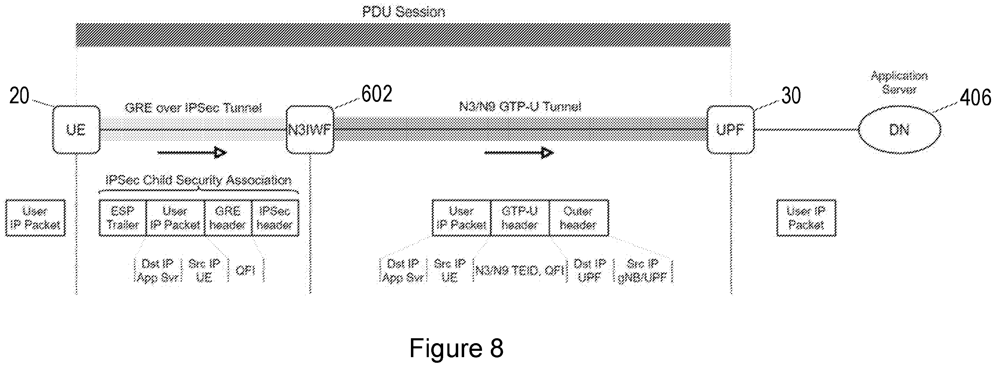

**Figures 7** **and** **8** illustrate an example of the transmission of the received access traffic towards the UPF node 30 via the 3GPP access network 402 and via the non-3GPP access network 404 respectively.

As illustrated in Figure 7, in the case of transmission via the 3GPP access network 402, the received access traffic may be transmitted towards the UPF node 30 via an intermediary node 502, such as a base station (e.g. a gNB). In some embodiments, such as that illustrated in Figure 7, the received access traffic may be carried by a bearer (e.g. a data radio bearer where the 3GPP access network is a RAN) from the UE 20 to the intermediary node 502. In some embodiments, such as that illustrated in Figure 7, the received access traffic may be carried by a tunnel (such as the N3 or N9 tunnel) from the intermediary node 502 to the UPF node 30. As also illustrated in Figure 7, in some embodiments, the UPF node 30 can be in communication with the data network 406.

As illustrated in Figure 8, in the case of transmission via the non-3GPP access network 404, the received access traffic may be transmitted towards the UPF node 30 via an intermediary node 602, such as a non-3GPP interworking function (N3IWF) node. In some embodiments, such as that illustrated in Figure 8, the received access traffic may be carried by a tunnel (such as an internet protocol security (IPSec) tunnel, e.g. using generic routing encapsulation (GRE)) from the UE 20 to the intermediary node 602. In some embodiments, such as that illustrated in Figure 8, the received access traffic may be carried by a tunnel (such as the N3 or N9 tunnel) from the intermediary node 602 to the UPF node 30. As also illustrated in Figure 8, in some embodiments, the UPF node 30 can be in communication with the data network 406.

As mentioned earlier, in some embodiments, the AF node 10 can (e.g. dynamically) maintain associations between access bearer unique identifiers and connectivity path (e.g. N3/N9 tunnel) identifiers. In this way, the AF node 10 is able to maintain the end-to-end visibility of sessions, such as PDU sessions or underlay connectivity services in the case of SW-WAN. Each QoS flow, in both types of access network, can be equivalent to virtual connections over a (e.g. PDU) session. The QoS flow unique identifier (QFI) can be preserved in the path between UE 20 and UPF node 30 but a QFI may only have significance at a (e.g. PDU) session level. In some embodiments, a QFI may be a 6 bits block in a GRE header. As mentioned earlier, in some embodiments, the AF node 10 can (e.g. dynamically) maintain associations between QoS flow unique identifiers and (e.g. PDU) session unique identifiers. In this way, the AF node 10 is be able to maintain the end-to-end visibility of QoS flows or tunnel virtual connections services in the case of SW-WAN.

As illustrated in Figure 6, in some embodiments, the UE 20 may receive performance measurements from a performance measurement function (PMF) 804. As also illustrated in Figure 6, in some embodiments, the UE 20 may acquire (e.g. receive, such as via a communications interface 26 of the UE 20) information on the 3GPP access network 402 and/or the non-3GPP access network 404, such as information indicative of the one or more network (or, more specifically, one or more connectivity paths, e.g. links or tunnels, such as the N3 tunnel and/or N9 tunnel) conditions in the 3GPP access network 402 and/or information indicative of the one or more network (or, more specifically, one or more connectivity paths, e.g. links or tunnels, such as the N3 tunnel and/or N9 tunnel) conditions in the non-3GPP access network 404. The UE 20 may acquire (e.g. receive, such as via a communications interface 26 of the UE 20) the information on the 3GPP access network 402 from the 3GPP access network 402. The UE 20 may acquire (e.g. receive, such as via a communications interface 26 of the UE 20) the information on the non-3GPP access network 404 from the non-3GPP access network 404 (e.g. via the one or more intermediary nodes).

Although not illustrated in Figure 5, in some embodiments, the method may comprise initiating transmission of information on the 3GPP access network 402 and/or the non-3GPP access network 404 towards the AF node 10. More specifically, the processing circuitry 22 of the UE 20 can be configured to initiate transmission of (e.g. itself transmit, such as via a communications interface 26 of the UE 20, or cause another node to transmit) the information. In some embodiments, transmission of the information may be initiated directly towards the AF node 10. In other embodiments, transmission of the information may be initiated indirectly towards the AF node 10 via the UPF node 30, such as via the Na2 and Na1 interfaces illustrated in Figure 1. In some embodiments, transmission of the information may be initiated in response to receiving (e.g. via a communications interface 26 of the UE 20) a request for the information from the AF node 10. In some embodiments, the request for the information may be received directly from the AF node 10. In other embodiments, the request for the information may be received indirectly from the AF node 10 via the UPF node 30, such as via the Na1 and Na2 interfaces illustrated in Figure 1.

In some embodiments, the information may comprise network status information on one or more bearers associated with one or more connectivity paths of the 3GPP access network 402 and/or non-3GPP access network 404. In some embodiments, the network status information comprises information about availability and QoS of the one or more bearers.

One or more network conditions are identifiable from the information. In some embodiments, the one or more network conditions may comprise one or more network conditions in one or more logical connectivity paths of the 3GPP access network 402, one or more network conditions in one or more physical connectivity paths of the 3GPP access network 402, one or more network conditions in one or more logical connectivity paths of the non-3GPP access network 404, and/or one or more network conditions in one or more physical connectivity paths of the non-3GPP access network 404. In some embodiments, the one or more network conditions may be indicative of network performance, network usage, and/or network faults. In some embodiments, the one or more network conditions indicative of network performance may comprise service experience, quality of service (QoS) characteristics, and/or QoS sustainability. In some embodiments, the one or more network conditions indicative of network usage may comprise network function load, UE mobility, UE communication, and/or bearer liveliness. In some embodiments, the one or more network conditions indicative of network faults may comprise abnormal behaviour and/or user data congestion. In some embodiments, information about the performance of bearers over the different types of access network may be acquired from a PMF. The UE 20 may perform its own path liveliness and/or quality measurement between the UE 20 and the UPF node 30. This information can be used when, in conjunction with policy criteria, the UE 20 makes decisions regarding how the access traffic is to be forwarded.

Although not illustrated in Figure 5, in some embodiments, the method may comprise establishing a session (e.g. a PDU session or a MA PDU session) with the 3GPP access network 402 and/or the non-3GPP access network 404. More specifically, the processing circuitry 22 of the UE 20 can be configured to establish the session according to some embodiments. In some embodiments, following the session establishment, when the user plane over the 3GPP access network and/or non-3GPP access network are established, a QoS flow may be created between the (e.g. RM of the) UE 20 and the (e.g. UVSF of the) UPF node 30 to create a bearer for the Na2 communication. A smallest-delay policy may be used for this flow.

In some embodiments, the session may be established in response to receiving a trigger (e.g. initiated using an Nnef_Trigger service) from the AF node to establish the session. In other embodiments, the session may be established in response to the UE 20 registering with the 3GPP access network 402 and/or the non-3GPP access network 404. Thus, in some embodiments, the UE 20 may be pre-configured to invoke establishment of a session when it is registered with at least one type of access network (i.e. the 3GPP access network and/or the non-3GPP access network). In some embodiments, in response to the UE 20 registering with the 3GPP access network 402 and/or the non-3GPP access network 404, transmission of a notification may be initiated towards the AF node 10. More specifically, the processing circuitry 22 of the UE 20 can be configured to initiate transmission of (e.g. itself transmit, such as via a communications interface 26 of the UE 20, or cause another node to transmit) the notification. The notification can be indicative that the UE 20 is registered with the 3GPP access network 402 and/or the non-3GPP access network 404.

Although also not illustrated in Figure 5, in some embodiments, the method may comprise identifying an application to which the received access traffic relates. More specifically, the processing circuitry 22 of the UE 20 can be configured to identify the application according to some embodiments. In some of these embodiments, the method may also comprise assigning the received access traffic to a connectivity path of the selected 3GPP access network 402 and/or the non-3GPP access network 404 based on the identified application, where transmission of the received access traffic towards the UPF node 30 is initiated via the assigned connectivity path. More specifically, the processing circuitry 22 of the UE 20 can be configured to assign the received access traffic to a connectivity path according to some embodiments. In some embodiments, the received access traffic (e.g. one or more packets of the received access traffic) may be classified and marked using a QoS flow identifier (QFI). As illustrated in Figure 6, in some embodiments, the received access traffic (e.g. one or more packets of the received access traffic) may be transmitted towards the UPF node 30 via the selected 3GPP access network 402 and/or the non-3GPP access network 404 with this QFI. The UE 20 may perform application detection and/or identification at a much finer granularity than with the regular use of packet detection rules for classification of data packets from applications into service data flows. The fine granularity of application identification enables traffic flow classification in support of differentiated service levels. The identification of an applications at the UE 20 level can enable the application of pre-programmed policy criteria for connectivity path (e.g. link or tunnel) utilisation as access traffic arrives. This may include applying routing features and network (e.g. WAN) optimisation features.

In some embodiments, the method may comprise initiating transmission of information indicative of one or more capabilities of the UE 20 towards the AF node 10. More specifically, the processing circuitry 22 of the UE 20 can be configured to initiate transmission of (e.g. e.g. itself transmit, such as via a communications interface 26 of the UE 20, or cause another node to transmit) this information towards the AF node 10 according to some embodiments. In some embodiments, transmission of this information may be initiated directly towards the AF node 10. In other embodiments, transmission of this information may be initiated indirectly towards the AF node 10 via the UPF node 30, such as via the Na2 and Na1 interfaces illustrated in Figure 1. In other embodiments, the AF node 10 can obtain information of UE capabilities through direct and/or indirect communication with one or more network functions (NFs).

In some embodiments, the method may comprise and thus the UE 20 (or, more specifically, the processing circuitry 22 of the UE 20) may perform any one or more of the following tasks relevant to ATSSS:
- registering with the 3GPP access network and the non-3GPP access network and/or invoking a (e.g. PDU or MA PDU) session;
- reporting on (e.g. PDU) handling capabilities and/or link conditions for both types of access network;
- application identification, e.g. based on first-packet inspection;
- application flow classification;
- applying policies to application flows;
- deciding on best forwarding option;
- QFI insertion and/or forwarding via bearers according to the one or more ATSSS policies;
- applying SD-WAN techniques, e.g. for forward-error-correction, packet duplication, WAN optimisation support, application aware forwarding, etc (which can improve the overall quality of experience);
- reporting back to the UPF node 30 on fault, performance, and/or usage; and
- reporting back to the UPF node 30 on observed bearer liveliness and/or quality characteristics (such as based on its own and/or a PMF's measurements).

In some embodiments, the RM 22a may coordinate with the ATSSS or ATSSS-LL functionality 22b to map pre-qualified application flows into service data flows (SDFs). The ATSSS or ATSSS-LL functionality 22b may then perform the forwarding of these SDFs (e.g. using applicable traffic forwarding templates) into specific QoS flows within the bearer services in each of the (e.g. PDU) sessions over the 3GPP access network and/or over the non-3GPP access network. The QFI bits may be inserted into the bearer stack (e.g. data radio bearer (DRB) stack) in the case of the 3GPP access network and/or in a header of a tunnel (e.g. the GRE header of the GRE/IPSec tunnel to N3IWF) in case of the non-3GPP access network. In some embodiments, for egress flows, the RM 22a may receive the packets of the access traffic from ATSSS or ATSSS-LL functionality 22b, identify the application flow the packets belongs to, apply network (e.g. WAN) optimisation treatment as required (e.g. recover missing packets by using forward error correction (FEC) information in received packets, perform packet re-ordering, etc.) and deliver the access traffic to the local area network of the user. In some embodiments, the RM 22a may collect relevant information on usage, QoS, and/or other relevant events and make this information available to the UPF node 30, e.g. via the interface Na2.

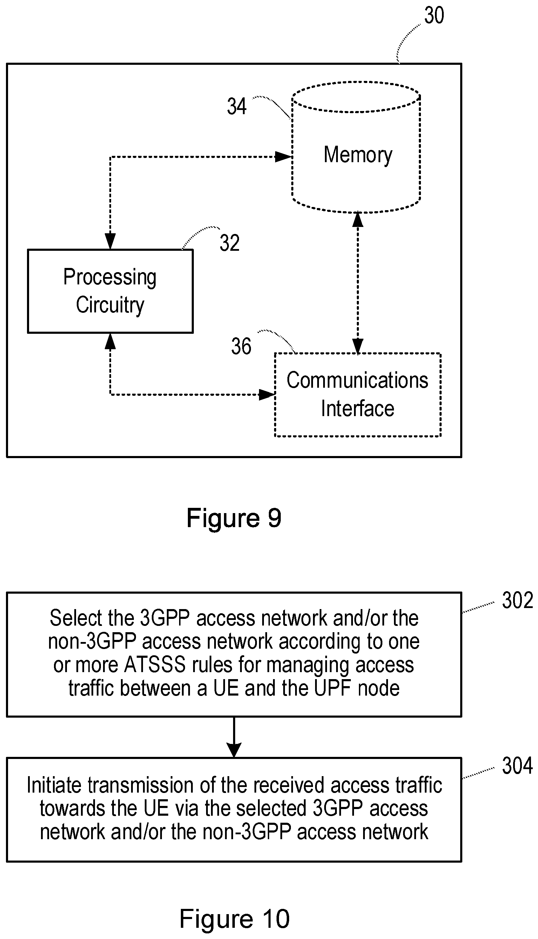

**Figure** 9 illustrates the UPF node 30 in accordance with an embodiment. The UPF node 30 is for managing access traffic in the access network. As mentioned earlier, the access network comprises a 3GPP access network 402 and a non-3GPP access network 404. As also mentioned earlier, the UPF node 30 is in the user plane of the core network.

As illustrated in Figure 9, the UPF node 30 comprises processing circuitry (or logic) 32. The processing circuitry 32 controls the operation of the UPF node 30 and can implement the method described herein in respect of the UPF node 30. The processing circuitry 32 can be configured or programmed to control the UPF node 30 in the manner described herein. The processing circuitry 32 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the UPF node 30. In some embodiments, the processing circuitry 32 can be configured to run software to perform the method described herein in respect of the UPF node 30. The software may be containerised according to some embodiments. Thus, in some embodiments, the processing circuitry 32 may be configured to run a container to perform the method described herein in respect of the UPF node 30.

Briefly, the processing circuitry 32 of the UPF node 30 is configured to, in response to receiving access traffic from the data network 406, select the 3GPP access network 402 and/or the non-3GPP access network 404 according to one or more ATSSS rules for managing access traffic between the UPF node 30 and the UE 20. The one or more ATSSS rules are generated by the AF node 10 operating between the control plane of the core network and the user plane of the core network. The processing circuitry 32 of the UPF node 30 is configured to initiate transmission of the received access traffic towards the UE 20 via the selected 3GPP access network and/or the non-3GPP access network.

As illustrated in Figure 9, in some embodiments, the UPF node 30 may optionally comprise a memory 34. The memory 34 of the UPF node 30 can comprise a volatile memory or a non-volatile memory. In some embodiments, the memory 34 of the UPF node 30 may comprise a non-transitory media. Examples of the memory 34 of the UPF node 30 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 32 of the UPF node 30 can be connected to the memory 34 of the UPF node 30. In some embodiments, the memory 34 of the UPF node 30 may be for storing program code or instructions which, when executed by the processing circuitry 32 of the UPF node 30, cause the UPF node 30 to operate in the manner described herein in respect of the UPF node 30. For example, in some embodiments, the memory 34 of the UPF node 30 may be configured to store program code or instructions that can be executed by the processing circuitry 32 of the UPF node 30 to cause the UPF node 30 to operate in accordance with the method described herein in respect of the UPF node 30. Alternatively or in addition, the memory 34 of the UPF node 30 can be configured to store any traffic, information, data, messages, requests, responses, indications, notifications, signals, or similar, that are described herein. The processing circuitry 32 of the UPF node 30 may be configured to control the memory 34 of the UPF node 30 to store traffic, information, data, messages, requests, responses, indications, notifications, signals, or similar, that are described herein.

In some embodiments, as illustrated in Figure 9, the UPF node 30 may optionally comprise a communications interface 36. The communications interface 36 of the UPF node 30 can be connected to the processing circuitry 32 of the UPF node 30 and/or the memory 34 of UPF node 30. The communications interface 36 of the UPF node 30 may be operable to allow the processing circuitry 32 of the UPF node 30 to communicate with the memory 34 of the UPF node 30 and/or vice versa. Similarly, the communications interface 36 of the UPF node 30 may be operable to allow the processing circuitry 32 of the UPF node 30 to communicate with the AF node 10, the UE 20, and/or any other node described herein. The communications interface 36 of the UPF node 30 can be configured to transmit and/or receive traffic, information, data, messages, requests, responses, indications, notifications, signals, or similar, that are described herein. In some embodiments, the processing circuitry 32 of the UPF node 30 may be configured to control the communications interface 36 of the UPF node 30 to transmit and/or receive traffic, information, data, messages, requests, responses, indications, notifications, signals, or similar, that are described herein.

Although the UPF node 30 is illustrated in Figure 9 as comprising a single memory 34, it will be appreciated that the UPF node 30 may comprise at least one memory (i.e. a single memory or a plurality of memories) 34 that operate in the manner described herein. Similarly, although the UPF node 30 is illustrated in Figure 9 as comprising a single communications interface 36, it will be appreciated that the UPF node 30 may comprise at least one communications interface (i.e. a single communications interface or a plurality of communications interface) 36 that operate in the manner described herein. It will also be appreciated that Figure 9 only shows the components required to illustrate an embodiment of the UPF node 30 and, in practical implementations, the UPF node 30 may comprise additional or alternative components to those shown.

**Figure 10** is a flowchart illustrating a method performed by the UPF node 30 in accordance with an embodiment. The method is for managing access traffic in an access network. As mentioned earlier, the access network comprises the third 3GPP access network 402 and the non-3GPP access network 404. The UPF node 30 described earlier with reference to Figure 9 is configured to operate in accordance with the method of Figure 10. The method can be performed by or under the control of the processing circuitry 32 of the UPF node 30.

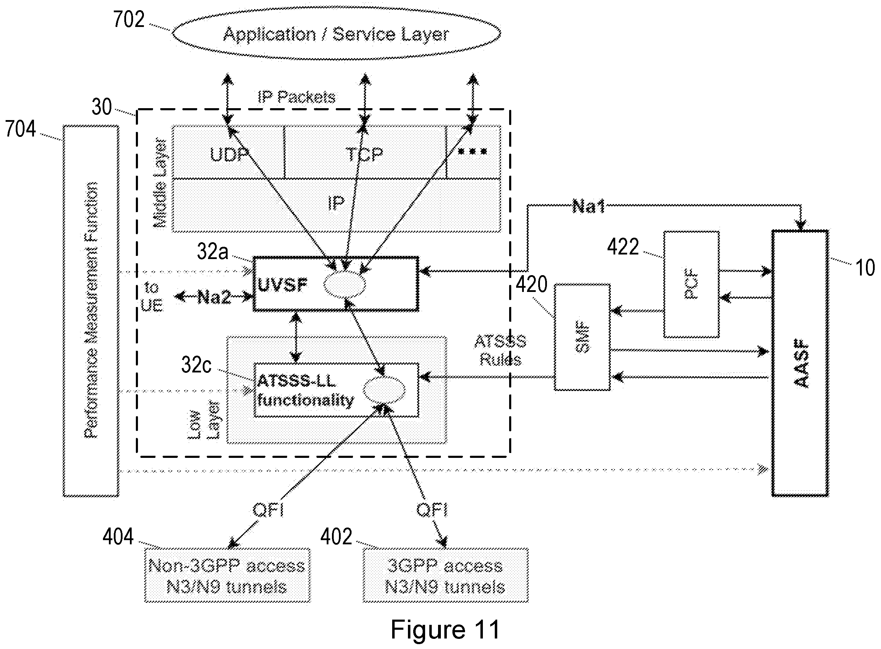

**Figure 11** is a block diagram illustrating a system in accordance with an embodiment, such as the system illustrated in Figure 1. The system of Figure 11 is illustrated from the perspective of the UPF node 30. The method of 10 will now be described with reference to Figures 1 and 11.

As illustrated at block 302 of Figure 10, in response to receiving access traffic from the data network 406, the 3GPP access network and/or the non-3GPP access network is selected according to one or more ATSSS rules for managing access traffic between the UPF node 30 and the UE 20. More specifically, the processing circuitry 32 (e.g. the UVSF 32a) of the UPF node 30 selects the 3GPP access network and/or the non-3GPP access network. The access traffic received from the data network 406 can be access traffic that is directed to the user network (or user environment), e.g. to the UE 20. As illustrated in Figure 11, the access traffic may be received from an application or service layer 702. The access traffic can comprise one or more packets, such as one or more internet protocol (IP) packets. As illustrated in Figure 11, the access traffic may be received via a middle layer, e.g. according to a protocol, such as user datagram protocol (UDP) or transmission control protocol (TCP), which may depend on the type of traffic. This protocol can be built on top of an IP protocol.

The one or more ATSSS rules are generated by the AF node 10 operating between the control plane of the core network and the user plane of the core network, as described earlier. In some embodiments, the one or more ATSSS rules may be in compliance with one or more rules (or policies) of at least one NF node 410, 412, 414, 416, 418, 420 in the control plane of the core network, such as the PCF node 422 and/or the SMF node 420 in the control plane of the core network. Alternatively or in addition, the one or more ATSSS rules may be generated to be in compliance with a predefined resource configuration of the user plane of the core network. The one or more ATSSS rules can be as described earlier and may comprise any one or more of the examples described earlier.

Although not illustrated in Figure 10, in some embodiments, the method may comprise acquiring the one or more ATSSS rules. More specifically, the processing circuitry 32 (or the ATSSS functionality, e.g. ATSSS-LL functionality, 32c) of the UPF node 30 can be configured to acquire the one or more ATSSS rules. In some embodiments, acquiring the one or more ATSSS rules may comprise receiving the one or more ATSSS rules from the AF node 10. More specifically, the processing circuitry 32 (or the ATSSS functionality, e.g. ATSSS-LL functionality, 32c) of the UPF node 30 can be configured to receive (e.g. via a communications interface 36 of the UPF node 30) the one or more ATSSS rules from the AF node 10, such as via the Na1 interface illustrated in Figure 1. In some embodiments, the ATSSS rules may be received from the PCF node 422 and/or the SMF node 420, e.g. via the Packet Forward Control Protocol (PFCP) over the N4 interface. In this case, the AF node 10 may have influenced such rules from the PCF node 422 and/or the SMF node 420.

As illustrated at block 304 of Figure 10, transmission of the received access traffic is initiated towards the UE 20 via the selected 3GPP access network 402 and/or the non-3GPP access network 404. More specifically, the processing circuitry 32 (e.g. the UVSF 32a) of the UPF node 30 initiates transmission of the received access traffic. The processing circuitry 32 (e.g. the UVSF 32a) of the UPF node 30 can be configured to itself transmit the received access traffic (e.g. via a communications interface 36 of the UPF node 30) or cause another node to transmit the received access traffic.

For example, in some embodiments, as illustrated in Figure 11, the UVSF 32a of the UPF node 30 can be configured to transmit the received access traffic to the 3GPP access network 402 and/or the non-3GPP access network 404 via the ATSSS, e.g. ATSSS-LL, functionality 32c. In some embodiments, the processing circuitry 22 (or the UVSF 32a) of the UPF node 30 can be configured to transmit the received access traffic to the 3GPP access network 402 and/or the non-3GPP access network 404 via one or more intermediary nodes.

As illustrated in Figure 11, in some embodiments, the UPF node 30 may receive performance measurements from a performance measurement function (PMF) 704. As also illustrated in Figure 11, in some embodiments, the UPF node 30 may acquire (e.g. receive, such as via a communications interface 36 of the UPF node 30) information on the 3GPP access network 402 and/or the non-3GPP access network 404, such as information indicative of the one or more network (or, more specifically, one or more connectivity paths, e.g. links or tunnels, such as the N3 tunnel and/or N9 tunnel) conditions in the 3GPP access network 402 and/or information indicative of the one or more network (or, more specifically, one or more connectivity paths, e.g. links or tunnels, such as the N3 tunnel and/or N9 tunnel) conditions in the non-3GPP access network 404. The UPF node 30 may acquire (e.g. receive, such as via a communications interface 36 of the UPF node 30) the information on the 3GPP access network 402 from the 3GPP access network 402. The UE 20 may acquire (e.g. receive, such as via a communications interface 26 of the UE 20) the information on the non-3GPP access network 404 from the non-3GPP access network 404 (e.g. via the one or more intermediary nodes).

Although not illustrated in Figure 10, in some embodiments, the method may comprise initiating transmission of information on the 3GPP access network and/or the non-3GPP access network towards the AF node 10, such as via the Na1 interface illustrated in Figure 1. More specifically, the processing circuitry 32 of the UPF node 30 can be configured to initiate transmission of (e.g. itself transmit, such as via a communications interface 36 of the UPF node 30, or cause another node to transmit) the information. In some embodiments, transmission of the information may be initiated in response to receiving (e.g. via a communications interface 36 of the UPF node 30) a request for the information from the AF node 10, such as via the Na1 interface illustrated in Figure 1.

In some embodiments, the information may comprise network status information on one or more bearers associated with one or more connectivity paths of the 3GPP access network 402 and/or non-3GPP access network 404. In some embodiments, the network status information comprises information about availability and QoS of the one or more bearers.

One or more network conditions are identifiable from the information. In some embodiments, the one or more network conditions may comprise one or more network conditions in one or more logical connectivity paths of the 3GPP access network 402, one or more network conditions in one or more physical connectivity paths of the 3GPP access network 402, one or more network conditions in one or more logical connectivity paths of the non-3GPP access network 404, and/or one or more network conditions in one or more physical connectivity paths of the non-3GPP access network 404. In some embodiments, the one or more network conditions may be indicative of network performance, network usage, and/or network faults. In some embodiments, the one or more network conditions indicative of network performance may comprise service experience, quality of service (QoS) characteristics, and/or QoS sustainability. In some embodiments, the one or more network conditions indicative of network usage may comprise network function load, UE mobility, UE communication, and/or bearer liveliness. In some embodiments, the one or more network conditions indicative of network faults may comprise abnormal behaviour and/or user data congestion. In some embodiments, information about the performance of bearers over the different types of access network may be acquired from the PMF 32b. The UPF node 30 may perform its own path liveliness and/or quality measurement between the UPF node 30 and the UE 20. This information can be used when, in conjunction with policy criteria, the UPF node 30 makes decisions regarding how the access traffic is to be forwarded.

Although not illustrated in Figure 10, in some embodiments, the method may comprise (e.g. detecting and/or) identifying an application to which the received access traffic relates. More specifically, the processing circuitry 32 of the UPF node 30 can be configured to (e.g. detect and/or) identify the application according to some embodiments. In some embodiments, this may be based on a first packet match. For example, the first packet (e.g. the TCP SYN segment or first UDP datagram) in the access traffic may be used to identify the application to which the received access traffic relates. The application may be a protocol or a service. The UPF node 30 may perform application detection and/or identification at a much finer granularity than with the regular use of packet detection rules for classification of data packets from applications into service data flows. The fine granularity of application identification enables traffic flow classification in support of differentiated service levels. The identification of an applications at the UPF node 30 level can enable the application of pre-programmed policy criteria for connectivity path (e.g. link or tunnel) utilisation as access traffic arrives. This may include applying routing features and network (e.g. WAN) optimisation features.

In some embodiments, the method may also comprise assigning the received access traffic to a connectivity path of the selected 3GPP access network 402 and/or the non-3GPP access network 404 based on the identified application, where transmission of the received access traffic towards the UE 20 is initiated via the assigned connectivity path. More specifically, the processing circuitry 32 of the UPF node 30 can be configured to assign the received access traffic to a connectivity path according to some embodiments. In some embodiments, the received access traffic (e.g. one or more packets of the received access traffic) may be classified and marked using a QoS flow identifier (QFI). As illustrated in Figure 11, in some embodiments, the received access traffic (e.g. one or more packets of the received access traffic) may be transmitted towards the UE 20 via the selected 3GPP access network 402 and/or the non-3GPP access network 404 with this QFI.

In some embodiments, the method may comprise and thus the UPF node 30 (or, more specifically, the processing circuitry 32 of the UPF node 30) may perform any one or more of the following tasks relevant to ATSSS:
- receiving configuration and/or policies from the AF node 10;
- application identification, e.g. based on first-packet inspection;
- application flow classification;
- applying policies to application flows;
- deciding on best forwarding option;
- cooperating with ATSSS or ATSSS-LL functionality for appropriate QFI insertion and/or forwarding mode;
- applying SD-WAN techniques, e.g. for forward-error-correction, packet duplication, WAN optimisation support, application aware forwarding, etc (which can improve the overall quality of experience);
- controlling the UE 20 functionality;
- reporting back to the AF node 10 on fault, performance, and/or usage; and
- reporting back to the AF node 10 on observed bearer liveliness and/or quality characteristics (such as based on its own and/or a PMF's measurements).

In some embodiments, the UPF node 30 (or, more specifically, the processing circuitry 32, such as the UVSF 32a, of the UPF node 30) can implement one or more internal interfaces for managing access traffic (e.g. packet) forwarding capabilities. In some embodiments, the UVSF 32a may coordinate with the ATSSS or ATSSS-LL functionality 32c to map pre-qualified application flows into service data flows (SDFs). The ATSSS or ATSSS-LL functionality 32c may then perform the forwarding of these SDFs (e.g. using applicable traffic forwarding templates) into specific QoS flows within the N3/N9 tunnels in each of the (e.g. PDU) sessions over the 3GPP access network and/or over the non-3GPP access network. The QFI bits may be inserted into the relevant GTP-U headers. In some embodiments, for egress flows, the UVSF 32a may receive the packets of the access traffic from ATSSS or ATSSS-LL functionality 32c, identify the application flow the packets belongs to, apply network (e.g. WAN) optimisation treatment as required (e.g. recover missing packets by using forward error correction (FEC) information in received packets, perform packet re-ordering, etc.) and deliver the access traffic to the interface N6 between the UPF node 30 and the data network 406. In some embodiments, the UVSF 32a may collect relevant information on usage, QoS, and/or other relevant events and make this information available to the AF node, e.g. via the interface Na1.

There is also provided a system comprising at least one AF node 10 as described earlier with reference to Figure 2, at least one UE 20 as described earlier with reference to Figure 4, and/or at least one UPF node 30 as described earlier with reference to Figure 9. The is also provided a method performed by a system comprising the method described earlier with reference to Figure 3, the method described earlier with reference to Figure 5, and/or the method described earlier with reference to Figure 10.

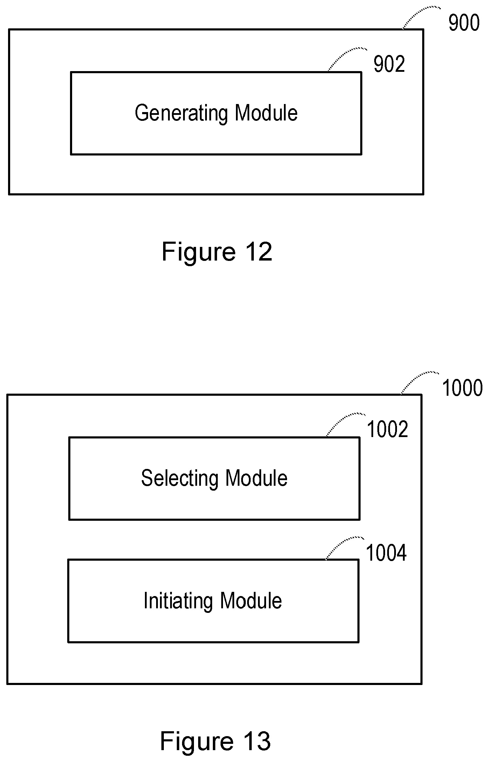

**Figure 12** is a block diagram illustrating an AF node 900 in accordance with an embodiment. The AF node 900 is for managing access traffic in an access network comprising a 3GPP access network and a non-3GPP access network 404. The AF node 900 operates between a control plane of a core network and a user plane of the core network. The AF node 900 comprises a generating module 902 configured to generate one or more ATSSS rules for managing access traffic between a UE and a UPF node in the user plane of the core network. The one or more ATSSS rules are generated based on one or more network conditions in the 3GPP access network and the non-3GPP access network. The one or more ATSSS rules are indicative of whether access traffic is to be transmitted via the 3GPP access network and/or the non-3GPP access network. The AF node 900 may operate in the manner described herein in respect of the AF node.

**Figure 13** is a block diagram illustrating a UE 1000 in accordance with an embodiment. The UE 1000 is for managing access traffic in an access network comprising a 3GPP access network and a non-3GPP access network. The UE 1000 comprises a selecting module 1002 configured to, in response to receiving access traffic from a user network, select the 3GPP access network and/or the non-3GPP access network according to one or more ATSSS rules for managing access traffic between the UE and a UPF node in a user plane of a core network. The one or more ATSSS rules are generated by an AF node operating between a control plane of the core network and the user plane of the core network. The UE 1000 also comprises an initiating module 1004 configured to initiate transmission of the received access traffic towards the UPF node via the selected 3GPP access network and/or the non-3GPP access network. The UE 1000 may operate in the manner described herein in respect of the UE.

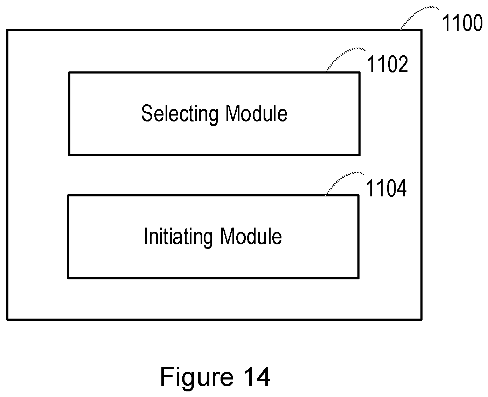

**Figure 14** is a block diagram illustrating a UPF node 1100 in accordance with an embodiment. The UPF node 1100 is for managing access traffic in an access network comprising a 3GPP access network and a non-3GPP access network. The UPF node 1100 is in a user plane of a core network. The UPF node 1100 comprises a selecting module 1102 configured to, in response to receiving access traffic from a data network, select the 3GPP access network and/or the non-3GPP access network according to one or more ATSSS rules for managing access traffic between the UPF node and a UE. The one or more ATSSS rules are generated by an AF node operating between a control plane of the core network and the user plane of the core network. The UPF node 1100 also comprises an initiating module 1104 configured to initiate transmission of the received access traffic towards the UE via the selected 3GPP access network and/or the non-3GPP access network. The UPF node 1100 may operate in the manner described herein in respect of the UPF node.

There is also provided a computer program comprising instructions which, when executed by processing circuitry (such as the processing circuitry 12 of the AF node 10 described earlier, the processing circuitry 22 of the UE 20 described earlier, and/or the processing circuitry 32 of the UPF node 30 described earlier), cause the processing circuitry to perform at least part of the method described herein. There is provided a computer program product, embodied on a non-transitory machine-readable medium, comprising instructions which are executable by processing circuitry (such as the processing circuitry 12 of the AF node 10 described earlier, the processing circuitry 22 of the UE 20 described earlier, and/or the processing circuitry 32 of the UPF node 30 described earlier) to cause the processing circuitry to perform at least part of the method described herein. There is provided a computer program product comprising a carrier containing instructions for causing processing circuitry (such as the processing circuitry 12 of the AF node 10 described earlier, the processing circuitry 22 of the UE 20 described earlier, and/or the processing circuitry 32 of the UPF node 30 described earlier) to perform at least part of the method described herein. In some embodiments, the carrier can be any one of an electronic signal, an optical signal, an electromagnetic signal, an electrical signal, a radio signal, a microwave signal, or a computer-readable storage medium.

In some embodiments, the AF node functionality, the UPF node functionality, and/or any other node functionality described herein can be performed by hardware. Thus, in some embodiments, the AF node 10, the UPF node 30, and/or any other node described herein can be a hardware node. However, it will also be understood that optionally at least part or all of the AF node functionality, the UPF node functionality, and/or any other node functionality described herein can be virtualized. For example, the functions performed by the AF node 10, the UPF node 30, and/or any other node described herein can be implemented in software running on generic hardware that is configured to orchestrate the node functionality. Thus, in some embodiments, the AF node 10, the UPF node 30, and/or any other node described herein can be a virtual node. In some embodiments, at least part or all of the AF node functionality, the UPF node functionality, and/or any other node functionality described herein may be performed in a network enabled cloud. The AF node functionality, the UPF node functionality, and/or any other node functionality described herein may all be at the same location or at least some of the node functionality may be distributed.

It will be understood that at least some or all of the method steps described herein can be automated in some embodiments. That is, in some embodiments, at least some or all of the method steps described herein can be performed automatically.

Thus, in the manner described herein, there is advantageously provided techniques for managing access traffic in an access network. In particular, a new AF node 10 is advantageously incorporated into the system and new functionality is advantageously added to the UE 20 and the UPF node 30 to enable an appropriate selection of a 3GPP access network 402 and/or non-3GPP access network 404 for access traffic. The AF node 10 is capable of configuring one or more appropriate ATSSS rules, which are pushed to the UE 20 and/or UPF node 30 (e.g. via the core network) for use in selecting the most appropriate type of access network.

It should be noted that the above-mentioned embodiments illustrate rather than limit the idea, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method for managing access traffic in an access network comprising a third Generation Partnership Project, 3GPP, access network (402) and a non-3GPP access network (404), wherein the method is performed by an application function, AF, node (10) operating between a control plane of a core network and a user plane of the core network, wherein the method comprises:
generating (102) one or more access traffic steering, switching, and splitting, ATSSS, rules for managing access traffic between a user equipment, UE (20), and a user plane function, UPF, node (30) in the user plane of the core network,
wherein the one or more ATSSS rules are generated based on one or more network conditions in the 3GPP access network (402) and the non-3GPP access network (404), and wherein the one or more ATSSS rules are indicative of whether access traffic is to be transmitted via the 3GPP access network (402) and/or the non- 3GPP access network (404);
wherein the method further comprises:
acquiring information on the 3GPP access network (402) and the non-3GPP access network (404); and
identifying the one or more network conditions from the acquired information;
wherein the information is acquired at least from a management and orchestration, MANO, layer (408) and wherein the information acquired from the MANO layer (408) comprises one or more rules related to ATSSS.

2. A method as claimed in claim 1, wherein: acquiring the information comprises:
initiating transmission of a request for the information towards the MANO layer (408); and/or
receiving the information from the MANO layer (408).

3. An application function, AF, node (10) operating between a control plane of a core network and a user plane of the core network, the AF node (10) comprising: processing circuitry (12) configured to operate in accordance with any of claims 1 to 2.

4. A method for managing access traffic in an access network comprising a third Generation Partnership Project, 3GPP, access network (402) and a non-3GPP access network (404), wherein the method is performed by a user equipment, UE (20), and an Access Function, AF (10), and the method
comprises:
in response to receiving access traffic from a user network:
selecting (202) by the UE (20) the 3GPP access network (402) and/or the non-3GPP access
network (404) according to one or more access traffic steering, switching, and splitting, ATSSS, rules for managing access traffic between the UE (20) and a user plane function, UPF, node in a user plane of a core network, wherein the one or more ATSSS rules are generated by an application function, AF, node operating between a control plane of the core network and the user plane of the core network; and
initiating (204) by the UE (20) transmission of the received access traffic towards the UPF node
via the selected 3GPP access network (402) and/or the non-3GPP access network (404);
wherein the one or more ATSSS rules are generated by the AF node based on one or more network conditions in the 3GPP access network (402) and the non-3GPP access network (404), the one or more network conditions being identified by the AF node from information acquired on the 3GPP access network (402) and the non-3GPP access network (404);
wherein the information is acquired by the AF (10) from a management and orchestration,
MANO, layer (408) and wherein the information acquired from the MANO layer (408) comprises one or more rules related to ATSSS.

5. A method as claimed in claim 4, the method comprising:
establishing by the UE (20)
a session with the 3GPP access network (402) and/or the non-3GPP access network (404), wherein:
the session is established in response to receiving a trigger from the AF node (10) to establish the session; or
the session is established in response to the UE (20) registering with the 3GPP access network (402) and/or the non-3GPP access network (404).

6. A method as claimed in any of claims 4 to 5, the method comprising:
in response to the UE (20) registering with the 3GPP access network (402) and/or the non-3GPP access network (404): initiating transmission of a notification towards the AF node (10), wherein the notification is indicative that the UE (20) is registered with the 3GPP access network (402) and/or the non-3GPP access network (404).

7. A system comprising an Access Function, AF (10), and a user equipment, UE (20) comprising: processing circuitry (22) configured to operate ir accordance with any of claims 4 to 6.

8. A method for managing access traffic in an access network comprising a third Generation Partnership Project, 3GPP, access network (402) and a non-3GPP access network (404), wherein the method is performed by a user plane function, UPF, node in a user plane of a core network and an Access Function, AF (10), and the method comprises:
in response to receiving access traffic from a data network (406):
selecting (302) by the UPF, the 3GPP access network (402) and/or the non-3GPP access
network (404) according to one or more access traffic steering, switching, and splitting, ATSSS, rules for managing access traffic between the UPF node and a user equipment,
UE (20), wherein the one or more ATSSS rules are generated by an application function, AF, node operating between a control plane of the core network and the user plane of the core network; and
initiating (304) by the UPF, transmission of the received access traffic towards the UE (20) via
the selected 3GPP access network (402) and/or the non-3GPP access network (404);
wherein the one or more ATSSS rules are generated by the AF node based on one or more network conditions in the 3GPP access network (402) and the non-3GPP access network (404), the one or more network conditions being identified by the AF node from information acquired on the 3GPP access network (402) and the non-3GPP access network (404);
wherein the information is acquired, by the AF (10), from a management and orchestration,
MANO, layer (408) and wherein the information acquired from the MANO layer (408) comprises one or more rules related to ATSSS.

9. A method as claimed in any of claims 1 to 2, 4 to 6, or 8, wherein: the one or more network conditions comprise:
one or more network conditions in one or more logical connectivity paths of the 3GPP access network (402);
one or more network conditions in one or more physical connectivity paths of the 3GPP access network (402);
one or more network conditions in one or more logical connectivity paths of the non-3GPP access network (404); and/or
one or more network conditions in one or more physical connectivity paths of the non-3GPP access network (404).

10. A method as claimed in any of claims 1 to 2, 4 to 6, or 8 to 9, wherein: the one or more ATSSS rules are in compliance with:
one or more rules of at least one network function, NF, node in the control plane of the core network; and/or
a predefined resource configuration of the user plane of the core network.

11. A system comprising an Access Function, AF (10), and a user plane function, UPF, node (30) in a user plane of a core network, the AF (10) and the UPF node (30) comprising: processing circuitry (32) configured to operate in accordance with claim 8.

12. A system (400) comprising: at least one AF node (10) as claimed in claim 3; at least one UE (20) as claimed in claim 7; and at least one UPF node (30) as claimed in claim 11.

13. A computer program product, embodied on a non-transitory machine-readable medium, comprising instructions which are executable by processing circuitry of one AF node (10) to cause the AF node (10) to perform the method according to any of claims 1 to 2, or instructions which are executable by processing circuitry of a system according to claim 7 to cause the system to perform the method according to any of claims 4 to 6, or instructions which are executable by processing circuitry of a system according to claim 11 to cause the system to perform the method according to claim 8.

## Patentansprüche

1. Verfahren zum Managen von Zugangsverkehr in einem Zugangsnetzwerk, umfassend ein third-Generation-Partnership-Project, 3GPP, Zugangsnetzwerk (402) und ein nicht-3GPP Zugangsnetzwerk (404), wobei das Verfahren durch einen Anwendungsfunktions-, AF, Knoten (10) durchgeführt wird, der zwischen einer Steuerebene eines Kernnetzes und einer Benutzerebene des Kernnetzes operiert, wobei das Verfahren umfasst:
Erzeugen (102) einer oder mehrerer Zugangsverkehrssteuerungs-, -schalt- und -, - aufteilungs-, ATSSS, Regeln zum Managen von Zugangsverkehr zwischen einem Benutzergerät, UE (20) und einem Benutzerebenenfunktions-, UPF, Knoten (30) in der Benutzerebene des Kernnetzes, wobei die einen oder mehreren ATSSS-Regeln erzeugt werden basierend auf einer oder mehreren Netzwerkbedingungen in dem 3GPP Zugangsnetzwerk (402) und dem nicht-3GPP Zugangsnetzwerk (404), und
wobei die eine oder mehreren ATSSS-Regeln indikativ dafür sind, ob Zugangsverkehr über das 3GPP Zugangsnetzwerk (402) und/oder das nicht-3GPP Zugangsnetzwerk (404) übertragen werden soll;
wobei das Verfahren ferner umfasst:
Akquirieren von Informationen über das 3GPP Zugangsnetzwerk (402) und das nicht-3GPP Zugangsnetzwerk (404); und
Identifizieren der einen oder mehreren Netzwerkbedingungen aus den akquirierten Informationen;
wobei die Informationen akquiriert werden von zumindest einer Management- und Orchestrierungs-, MANO, Schicht (408) und wobei die Informationen, die von der MANO-Schicht (408) akquiriert werden, eine oder mehrere Regeln umfassen, die mit ATSSS in Beziehung stehen.

2. Verfahren nach Anspruch 1, wobei: Akquirieren der Informationen umfasst:
Initiieren einer Übertragung einer Anfrage nach den Informationen an die MANO-Schicht (408); und/oder
Empfangen der Informationen von der MANO-Schicht (408).

3. Anwendungsfunktions- AF, Knoten (10), operierend zwischen einer Steuerebene eines Kernnetzes und einer Benutzerebene des Kernnetzes, wobei der AF-Knoten (10) umfasst: eine Verarbeitungsschaltung (12), die dazu konfiguriert ist, gemäß einem der Ansprüche 1 bis 2 zu operieren.

4. Verfahren zum Managen von Zugangsverkehr in einem Zugangsnetzwerk, umfassend ein third-Generation-Partnership-Project, 3GPP, Zugangsnetzwerk (402) und ein nicht-3GPP Zugangsnetzwerk (404), wobei das Verfahren durch ein Benutzergerät, UE (20) und eine Zugangsfunktion, AF (10) durchgeführt wird und das Verfahren umfasst:
als Antwort auf Empfangen von Zugangsverkehr von einem Benutzernetzwerk:
Auswählen (202), durch das UE (20), des 3GPP Zugangsnetzwerks (402) und/oder des nicht-3GPP Zugangsnetzwerks (404) gemäß einer oder mehrerer Zugangsverkehrssteuerungs-, -schalt- und -, -aufteilungs-, ATSSS, Regeln zum Managen von Zugangsverkehr zwischen einem Benutzergerät, UE (20), und einem Benutzerebenenfunktions-, UPF, Knoten (30) in einer Benutzerebene des Kernnetzes,
wobei die eine oder mehreren ATSSS-Regeln von einem Anwendungsfunktion-, AF, Knoten erzeugt werden, der zwischen einer Steuerebene des Kernnetzes und der Benutzerebene des Kernnetzes operiert; und
Initiieren (204), durch das UE (20), einer Übertragung des empfangenen Zugangsverkehrs an den UPF-Knoten über das ausgewählte 3GPP Zugangsnetzwerk (402) und/oder das nicht-3GPP Zugangsnetzwerk (404);
wobei die eine oder mehreren ATSSS-Regeln durch den AF-Knoten erzeugt werden basierend auf einer oder mehreren Netzwerkbedingungen in dem 3GPP Zugangsnetzwerk (402) und dem nicht-3GPP Zugangsnetzwerk (404), wobei die eine oder mehreren Netzwerkbedingungen durch den AF-Knoten aus Informationen identifiziert werden, die akquiriert sind aus dem 3GPP Zugangsnetzwerk (402) und/oder dem nicht-3GPP Zugangsnetzwerk (404);
wobei die Informationen akquiriert sind, durch die AF (10), von einer Management- und Orchestrierungs-, MANO, Schicht (408) und wobei die Informationen, die von der MANO-Schicht (408) akquiriert sind, eine oder mehrere Regeln umfassen, die mit ATSSS in Beziehung stehen.

5. Verfahren nach Anspruch 4, wobei das Verfahren umfasst:
Einrichten, durch das UE (20), einer Sitzung mit dem 3GPP Zugangsnetzwerk (402) und/oder dem nicht 3GPP Zugangsnetzwerk (404), wobei:
die Sitzung eingerichtet wird als Antwort auf Empfangen eines Triggers von dem AF-Knoten (10) zum Einrichten der Sitzung; oder
die Sitzung eingerichtet wird als Antwort auf Registrieren des UE (20) mit den 3GPP Zugangsnetzwerk (402) und/oder dem nicht 3GPP Zugangsnetzwerk (404).

6. Verfahren nach einem der Ansprüche 4 oder 5, wobei das Verfahren umfasst:
als Antwort auf Registrieren des UE (20) mit den 3GPP Zugangsnetzwerk (402) und/oder dem nicht 3GPP Zugangsnetzwerk (404): Initiieren einer Übertragung einer Benachrichtigung an den AF-Knoten (10), wobei die Benachrichtigung indikativ dafür ist, dass das UE (20) mit dem 3GPP Zugangsnetzwerk (402) und/oder dem nicht-3GPP Zugangsnetzwerk (404) registriert ist.

7. System, umfassend einen Zugangsfunktions-, AF, Knoten (10), und ein Benutzergerät, UE (20), umfassend: eine Verarbeitungsschaltung (22), die dazu konfiguriert ist, gemäß einem der Ansprüche 4 bis 6 zu operieren.

8. Verfahren zum Managen von Zugangsverkehr in einem Zugangsnetzwerk, umfassend ein third-Generation-Partnership-Project, 3GPP, Zugangsnetzwerk (402) und ein nicht-3GPP Zugangsnetzwerk (404), wobei das Verfahren durch einen Benutzerebenenfunktions-, UPF, Knoten (30) in einer Benutzerebene eines Kernnetzes und eine Zugangsfunktion, AF (10) durchgeführt wird und das Verfahren umfasst:
als Antwort auf Empfangen von Zugangsverkehr von einem Datennetzwerk (406):
Auswählen (302), durch das UPF, des 3GPP Zugangsnetzwerks (402) und/oder des nicht-3GPP Zugangsnetzwerks (404) gemäß einer oder mehrerer Zugangsverkehrssteuerungs-, -schalt- und -, -aufteilungs-, ATSSS, Regeln zum Managen von Zugangsverkehr zwischen dem UPF-Knoten und einem Benutzergerät, UE (20), wobei die eine oder mehreren ATSSS-Regeln von einem Anwendungsfunktion-, AF, Knoten erzeugt werden, der zwischen einer Steuerebene des Kernnetzes und der Benutzerebene des Kernnetzes operiert; und
Initiieren (304), durch das UPF, einer Übertragung des empfangenen Zugangsverkehrs an das UE (20) über das ausgewählte 3GPP Zugangsnetzwerk (402) und/oder das nicht-3GPP Zugangsnetzwerk (404);
wobei die eine oder mehreren ATSSS-Regeln durch den AF-Knoten erzeugt werden basierend auf einer oder mehreren Netzwerkbedingungen in dem 3GPP Zugangsnetzwerk (402) und dem nicht-3GPP Zugangsnetzwerk (404), wobei die eine oder mehreren Netzwerkbedingungen durch den AF-Knoten aus Informationen identifiziert werden, die akquiriert sind aus dem 3GPP Zugangsnetzwerk (402) und/oder dem nicht-3GPP Zugangsnetzwerk (404);
wobei die Informationen akquiriert werden, durch die AF (10), von einer Management- und Orchestrierungs-, MANO, Schicht (408) und wobei die Informationen, die von der MANO-Schicht (408) akquiriert werden, eine oder mehrere Regeln umfassen, die mit ATSSS in Beziehung stehen.

9. Verfahren nach einem der Ansprüche 1 bis 2, 4 bis 6, oder 8 wobei: die eine oder mehreren Netzwerkbedingungen umfassen:
eine oder mehrere Netzwerkbedingungen in einem oder mehreren logischen Verbindungspfaden des 3GPP Zugangsnetzwerks (402);
eine oder mehrere Netzwerkbedingungen in einem oder mehreren physischen Verbindungspfaden des 3GPP Zugangsnetzwerks (402);
eine oder mehrere Netzwerkbedingungen in einem oder mehreren logischen Verbindungspfaden es nicht-3GPP Zugangsnetzwerks (404); und/oder eine oder mehrere Netzwerkbedingungen in einem oder mehreren physischen Verbindungspfaden des nicht-3GPP Zugangsnetzwerks (404).

10. Verfahren nach einem der Ansprüche 1 bis 2, 4 bis 6, oder 8 bis 9 wobei: wobei die eine oder mehreren ATSSS-Regeln in Übereinstimmung sind mit:
einer oder mehreren Regeln des mindestens einen Netzwerkfunktions-, NF, Knotens in der Steuerebene des Kernnetzes; und/oder
einer vordefinierten Ressourcenkonfiguration der Benutzerebene des Kernnetzes.

11. System, umfassend eine Zugangsfunktion, AF (10), und einen Benutzerebenenfunktions -, UPF, Knoten (30) in einer Benutzerebene eines Kernnetzes, wobei die AF (10) und der UPF-Knoten (30) umfassen: eine Verarbeitungsschaltung (32), die dazu konfiguriert ist, gemäß Anspruch 8 zu operieren.

12. System (400), umfassend: mindestens einen AF-Knoten (10) nach Anspruch 3, mindestens ein UE (20) nach Anspruch 7; und mindestens einen UPF-Knoten (30) nach Anspruch 11.

13. Computerprogrammprodukt, das auf einem nicht-transitorischen maschinenlesbaren Medium enthalten ist, umfassend Anweisungen, die ausführbar sind durch eine Verarbeitungsschaltung eines AF-Knotens (10), zum Veranlassen des AF-Knotens (10), das Verfahren nach einem der Ansprüche 1 bis 2 durchzuführen, oder Anweisungen, die ausführbar sind durch eine Verarbeitungsschaltung eines Systems nach Anspruch 7, zum Veranlassen des Systems, das Verfahren nach einem der Ansprüche 4 bis 6 durchzuführen, oder Anweisungen, die ausführbar sind durch eine Verarbeitungsschaltung eines Systems nach Anspruch 11, zum Veranlassen des Systems, das Verfahren nach Anspruch 8 durchzuführen.

## Revendications

1. Procédé de gestion du trafic d'accès dans un réseau d'accès comprenant un réseau d'accès de type projet de partenariat de troisième génération, 3GPP, (402) et un réseau d'accès non-3GPP (404), dans lequel le procédé est réalisé par un nœud à fonction d'application, AF, (10) opérant entre un plan de commande d'un réseau central et un plan utilisateur du réseau central, dans lequel le procédé comprend :
la génération (102) d'une ou plusieurs règles de guidage, de commutation et de division de trafic d'accès, ATSSS, pour gérer le trafic d'accès entre un équipement utilisateur, UE (20), et un nœud à fonction de plan utilisateur, UPF, (30) dans le plan utilisateur du réseau central,
dans lequel les une ou plusieurs règles ATSSS sont générées sur la base d'une ou plusieurs conditions de réseau dans le réseau d'accès 3GPP (402) et le réseau d'accès non-3GPP (404), et dans lequel les une ou plusieurs règles ATSSS indiquent si le trafic d'accès est à transmettre via le réseau d'accès 3GPP (402) et/ou le réseau d'accès non-3GPP (404) ;
dans lequel le procédé comprend en outre :
l'acquisition d'informations sur le réseau d'accès 3GPP (402) et le réseau d'accès non-3GPP (404) ; et
l'identification des une ou plusieurs conditions de réseau à partir des informations acquises ;
dans lequel les informations sont acquises au moins à partir d'une couche de gestion et d'orchestration, MANO, (408) et dans lequel les informations acquises à partir de la couche MANO (408) comprennent une ou plusieurs règles liées à l'ATSSS.

2. Procédé selon la revendication 1, dans lequel : l'acquisition des informations comprend :
l'initiation de la transmission d'une demande d'informations vers la couche MANO (408) ; et/ou
la réception des informations en provenance de la couche MANO (408).

3. Nœud à fonction d'application, AF, (10) opérant entre un plan de commande d'un réseau central et un plan utilisateur du réseau central, le nœud AF (10) comprenant :
un ensemble de circuits de traitement (12) configuré pour fonctionner selon l'une quelconque des revendications 1 à 2.

4. Procédé de gestion du trafic d'accès dans un réseau d'accès comprenant un réseau d'accès de type projet de partenariat de troisième génération, 3GPP, (402) et un réseau d'accès non-3GPP (404), dans lequel le procédé est réalisé par un équipement utilisateur, UE (20), et une fonction d'accès, AF (10), et le procédé comprend :
en réponse à la réception d'un trafic d'accès provenant d'un réseau utilisateur :
la sélection (202) par l'UE (20) du réseau d'accès 3GPP (402) et/ou du réseau d'accès non-3GPP (404) selon une ou plusieurs règles de guidage, de commutation et de division de trafic d'accès, ATSSS, pour gérer le trafic d'accès entre l'UE (20) et un nœud à fonction de plan utilisateur, UPF, dans un plan utilisateur d'un réseau central,
dans lequel les une ou plusieurs règles ATSSS sont générées par un nœud à fonction d'application, AF, opérant entre un plan de commande du réseau central et le plan utilisateur du réseau central ; et
l'initiation (204) par l'UE (20) de la transmission du trafic d'accès reçu vers le nœud UPF via le réseau d'accès 3GPP (402) sélectionné et/ou le réseau d'accès non-3GPP (404) ;
dans lequel les une ou plusieurs règles ATSSS sont générées par le nœud AF sur la base d'une ou plusieurs conditions de réseau dans le réseau d'accès 3GPP (402) et le réseau d'accès non-3GPP (404), les une ou plusieurs conditions de réseau étant identifiées par le nœud AF à partir d'informations acquises sur le réseau d'accès 3GPP (402) et le réseau d'accès non-3GPP (404) ;
dans lequel les informations sont acquises par l'AF (10) à partir d'une couche de gestion et d'orchestration, MANO, (408) et dans lequel les informations acquises à partir de la couche MANO (408) comprennent une ou plusieurs règles liées à l'ATSSS.

5. Procédé selon la revendication 4, le procédé comprenant :
l'établissement par l'UE (20) d'une session avec le réseau d'accès 3GPP (402) et/ou le réseau d'accès non-3GPP (404), dans lequel :
la session est établie en réponse à la réception d'un déclencheur provenant du nœud AF (10) pour établir la session ; ou
la session est établie en réponse à l'enregistrement de l'UE (20) auprès du réseau d'accès 3GPP (402) et/ou du réseau d'accès non-3GPP (404).

6. Procédé selon l'une quelconque des revendications 4 à 5, le procédé comprenant :
en réponse à l'enregistrement de l'UE (20) auprès du réseau d'accès 3GPP (402) et/ou du réseau d'accès non-3GPP (404) ; l'initiation de la transmission d'une notification vers le nœud AF (10), dans lequel la notification indique que l'UE (20) est enregistré auprès du réseau d'accès 3GPP (402) et/ou du réseau d'accès non-3GPP (404).

7. Système comprenant une fonction d'accès, AF (10), et un équipement utilisateur, UE (20) comprenant : un ensemble de circuits de traitement (22) configuré pour fonctionner selon l'une quelconque des revendications 4 à 6.

8. Procédé de gestion du trafic d'accès dans un réseau d'accès comprenant un réseau d'accès de type projet de partenariat de troisième génération, 3GPP, (402) et un réseau d'accès non-3GPP (404), dans lequel le procédé est réalisé par un nœud à fonction de plan utilisateur, UPF, dans un plan utilisateur d'un réseau central et une fonction d'accès, AF (10), et le procédé comprend :
en réponse à la réception de trafic d'accès provenant d'un réseau de données (406) :
la sélection (302) par l'UPF, du réseau d'accès 3GPP (402) et/ou du réseau d'accès non-3GPP (404) selon une ou plusieurs règles de guidage, de commutation et de division de trafic d'accès, ATSSS, pour gérer le trafic d'accès entre le nœud UPF et
un équipement utilisateur, UE (20), dans lequel les une ou plusieurs règles ATSSS sont générées par un nœud à fonction d'application, AF, opérant entre un plan de commande du réseau central et le plan utilisateur du réseau central ; et
l'initiation (304) par l'UPF, de la transmission du trafic d'accès reçu vers l'UE (20) via le réseau d'accès 3GPP (402) sélectionné et/ou le réseau d'accès non-3GPP (404) ;
dans lequel les une ou plusieurs règles ATSSS sont générées par le nœud AF sur la base d'une ou plusieurs conditions de réseau dans le réseau d'accès 3GPP (402) et le réseau d'accès non-3GPP (404), les une ou plusieurs conditions de réseau étant identifiées par le nœud AF à partir d'informations acquises sur le réseau d'accès 3GPP (402) et le réseau d'accès non-3GPP (404) ;
dans lequel les informations sont acquises, par l'AF (10), à partir d'une couche de gestion et d'orchestration, MANO, (408) et dans lequel les informations acquises à partir de la couche MANO (408) comprennent une ou plusieurs règles liées à l'ATSSS.

9. Procédé selon l'une quelconque des revendications 1 à 2, 4 à 6 ou 8, dans lequel :
les une ou plusieurs conditions de réseau comprennent :
une ou plusieurs conditions de réseau dans une ou plusieurs voies de connectivité logique du réseau d'accès 3GPP (402) ;
une ou plusieurs conditions de réseau dans une ou plusieurs voies de connectivité physique du réseau d'accès 3GPP (402) ;
une ou plusieurs conditions de réseau dans une ou plusieurs voies de connectivité logique du réseau d'accès non-3GPP (404) ; et/ou
une ou plusieurs conditions de réseau dans une ou plusieurs voies de connectivité physique du réseau d'accès non-3GPP (404).

10. Procédé selon l'une quelconque des revendications 1 à 2, 4 à 6, ou 8 à 9, dans lequel : les une ou plusieurs règles ATSSS sont conformes à :
une ou plusieurs règles d'au moins un nœud à fonction de réseau, NF, dans le plan de commande du réseau central ; et/ou
une configuration prédéfinie de ressources du plan utilisateur du réseau central.

11. Système comprenant une fonction d'accès, AF (10), et un nœud à fonction de plan utilisateur, UPF, (30) dans un plan utilisateur d'un réseau central, l'AF (10) et le nœud UPF (30) comprenant : un ensemble de circuits de traitement (32) configuré pour fonctionner selon la revendication 8.

12. Système (400) comprenant : au moins un nœud AF (10) selon la revendication 3 ; au moins un UE (20) selon la revendication 7 ; et
au moins un nœud UPF (30) selon la revendication 11.

13. Produit-programme informatique, incorporé sur un support non transitoire lisible par machine, comprenant des instructions qui sont exécutables par un ensemble de circuits de traitement d'un nœud AF (10) pour amener le nœud AF (10) à réaliser le procédé selon l'une quelconque des revendications 1 à 2, ou des instructions qui sont exécutables par un ensemble de circuits de traitement d'un système selon la revendication 7 pour amener le système à réaliser le procédé selon l'une quelconque des revendications 4 à 6, ou des instructions qui sont exécutables par un ensemble de circuits de traitement d'un système selon la revendication 11 pour amener le système à réaliser le procédé selon la revendication 8.
